# EUROPEAN PATENT APPLICATION

(11) **EP 4 756 253 A1**
(43) Date of publication of application: **10.06.2026**
(21) Application number: 24849165.6
(22) Date of filing: 30.07.2024
(51) Int. Cl.: F16H 7/12

(54) **BELT TRANSMISSION MECHANISM**

(30) Priority: 31.07.2023 JP 2023124260; 19.07.2024 JP 2024115605
(71) Applicant: Mitsuboshi Belting Ltd., Kobe-shi, Hyogo 653-0024 (JP)
(72) Inventor: DAN Ryosuke, Kobe-shi, Hyogo 653-0024 (JP); OISHI Satoshi, Kobe-shi, Hyogo 653-0024 (JP); MARUYAMA Yuji, Kobe-shi, Hyogo 653-0024 (JP)
(74) Representative: Hoffmann Eitle
(86) International application number: PCT/JP2024/027130
(87) International publication number: WO 2025/028520

(57) **Abstract**

The present invention pertains to a belt transmission mechanism comprising: a drive pulley which is fixed to a drive shaft driven by a drive source so as to be rotatable forward and backward; a driven pulley which is supported rotatably; a toothed belt which is wound around the drive pulley and the driven pulley; and an auto tensioner which automatically and moderately maintains the tension of the toothed belt through two tension rollers that are provided rotatably about respective base shaft parts at positions on both sides of a pulley center line connecting the center of rotation of the drive pulley and the center of rotation of the driven pulley, and that are in contact with the toothed belt. The belt transmission mechanism is characterized in that: the auto tensioner has a swing shaft provided so as to extend in the direction parallel to the drive shaft, through a point which is separated from an intersection point between the pulley center line and a roller center line connecting the rotation centers of the two tension rollers and which is on the pulley center line or a point on an extension line of the pulley center line, and has a spring for biasing the two tension rollers in a direction of being pulled to each other or in a direction of being separated from each other; and the two tension rollers are configured to swing freely about the swing shaft. The belt transmission mechanism is also characterized: by further comprising a regulation means for regulating the swings of the two tension rollers; and in that the regulation means is positioned to regulate the swinging of the two tension rollers about the swing shaft in a direction reverse to the biasing direction of the spring from the balanced position in which the driving pulley and the driven pulley are in a suspended state.

## Description

### TECHNICAL FIELD

The present invention relates to a belt power-transmission system which is incorporated in an arm or the like of an industrial robot and includes an automatic tensioner for automatically and appropriately maintaining tension of a toothed belt when a rotational force of a drive pulley is transmitted to a driven pulley via a toothed belt.

### BACKGROUND ART

In recent years, industrial robots such as vertical articulated robots and horizontal articulated robots (SCARA robots) have been widely used for automobile manufacturing, semiconductor manufacturing, smartphone manufacturing, and the like. In an industrial robot, for an arm drive and a wrist portion drive of the robot (hereinafter, referred to as the "robot arm drive"), a drive by a toothed belt (hereinafter, simply referred to as a "belt power-transmission system for robot arm drive") is adopted instead of a gear drive in order to achieve smaller size, higher speed, lighter weight, and the like.

Generally, in a belt power-transmission system not provided with an automatic tensioner, after a toothed belt (hereinafter, simply referred to as the "belt" in some cases) is attached, a step of adjusting (correcting) a tension drop of the belt occurring at an initial stage of driving (running) by performing idling (breaking-in driving) is required. However, in the belt power-transmission system for robot arm drive, the idling cannot be performed simply by mounting the toothed belt to a pulley in a robot arm due to a structure and a manufacturing process, and thus after the robot is assembled, a tension adjustment operation by idling, called aging, is performed. Due to the aging, several hours must be taken to get the robot into a correct control state, including retensioning the belt (tension adjustment operation) by adjusting an interval (intershaft distance) between a drive pulley and a driven pulley, retightening bolts of respective units, and the like, which causes a large amount of loss cost.

Since a drive of the robot arm involves frequent forward and reverse rotation, (a tight side and a slack side of the belt are reversed each time the belt rotates forward and reverse) at the time of forward and reverse switching (at the time of starting/stopping forward and reverse rotation), overtension easily occurs on the tight side of the belt, and slack easily occurs on the slack side of the belt. In this way, when the belt becomes overtension or the slack of the belt becomes large, synchronous power-transmission becomes uncertain (a difference in rotation angles of the drive pulley and the driven pulley becomes large), and the arm, a wrist portion, and the like cannot be accurately moved to a predetermined position (influence on a positioning accuracy of the arm and the like).

In a belt power-transmission system in which an interval between pulleys is narrow and a speed reduction ratio (ratio of pulley diameters) is large, a contact angle of the belt becomes small in a drive pulley with a smaller diameter, and if slack of the belt is large, there is a concern that a tooth jump of the belt may easily occur.

In synchronous (meshing) power-transmission by a toothed belt, in order to resolve the above problem, in principle, it is necessary to maintain tension of the belt automatically and appropriately (to an extent that the belt does not slack) (including adjustment of a tension drop occurring at an initial stage of running).

Specifically, in a belt power-transmission system for robot arm drive using a toothed belt, even when a tight side and a slack side of the belt are reversed each time the belt rotates forward and reverse, it is unnecessary to secure very high tension at the tight side of the belt (as in a case of frictional power-transmission) at the time of starting, and thus it is necessary to keep a tension variation to be low without applying a damping force, and on the other hand, it is necessary not to cause the belt to slack (as in the case of frictional power-transmission) at the slack side of the belt.

For this purpose, it is considered to adopt a belt power-transmission system for robot arm drive provided with an automatic tensioner in which by bringing two tension rollers, respectively provided rotatably on both sides sandwiching a pulley center line connecting rotation centers of a drive pulley and a driven pulley, into contact with (an outer circumferential surface or inner circumferential surface of) the belt using a moderate biasing action of a spring or the like, even if a tight side and a slack side of the belt are reversed each time the belt rotates forward or reverse, tension of the belt can be maintained automatically and appropriately (to an extent that the belt does not slack) (including adjustment of a tension drop occurring at an initial stage of running).

### (Technique in Related Art)

As an automatic tensioner provided in a belt power-transmission system for robot arm drive, for example, Patent Literature 1 (see FIG. 2 in Patent Literature 1) discloses a configuration in which two support arms 18A and 18B (members that connect base shaft portions and swing shafts of tension rollers) having the tension rollers at tip ends are respectively provided to be independently swingable, and a spring is stretched between the support arms.

According to this, by bringing two tension rollers, respectively provided rotatably on both sides sandwiching a pulley center line connecting rotation centers of a drive pulley and a driven pulley, into contact with a belt using a moderate biasing action of a spring or the like, even if a tight side and a slack side of the belt are reversed each time the belt rotates forward or reverse, tension of the belt can be maintained automatically and appropriately.

### CITATION LIST

### PATENT LITERATURE

Patent Literature 1: JPH02-110494U

### SUMMARY OF INVENTION

### TECHNICAL PROBLEM

However, according to the configuration in Patent Literature 1, when a load on the driven pulley increases (for example, when load torque on the driven pulley increases from about 1 N·m to about 3 N·m in the belt power-transmission system for robot arm drive), a moment of inertia of the driven pulley also increases. Therefore, at the time of forward and reverse switching (at the time of stopping forward and reverse rotation), the driven pulley cannot stop quickly immediately after the drive pulley stops, and a time (attenuation time) from the stop of the drive pulley to the stop of the driven pulley at the time of forward and reverse switching (at the time of stopping forward and reverse rotation) becomes longer. That is, there is a concern that an "attenuation property" of the driven pulley deteriorates at the time of forward and reverse switching (at the time of stopping forward and reverse rotation).

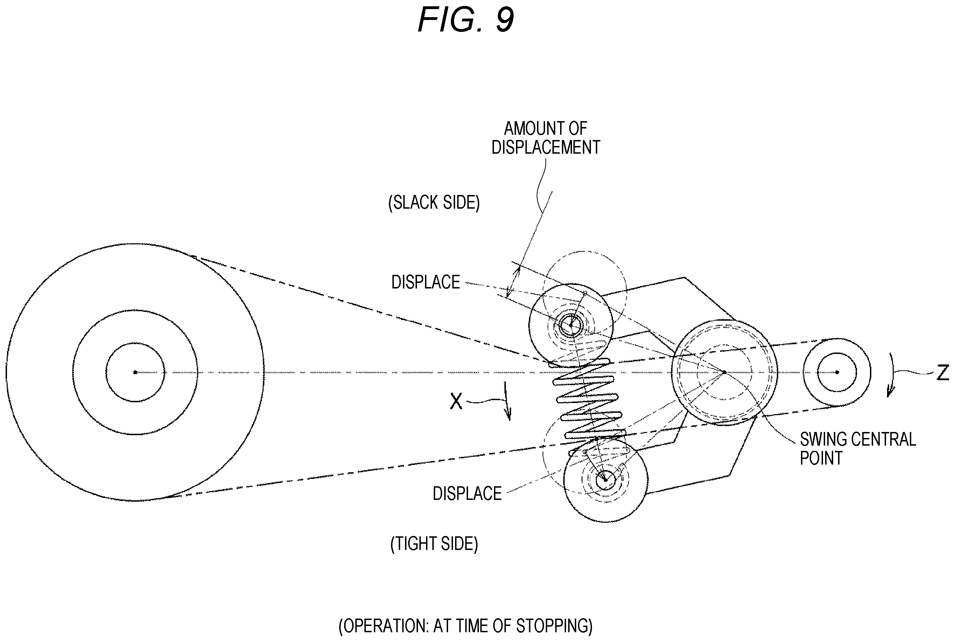

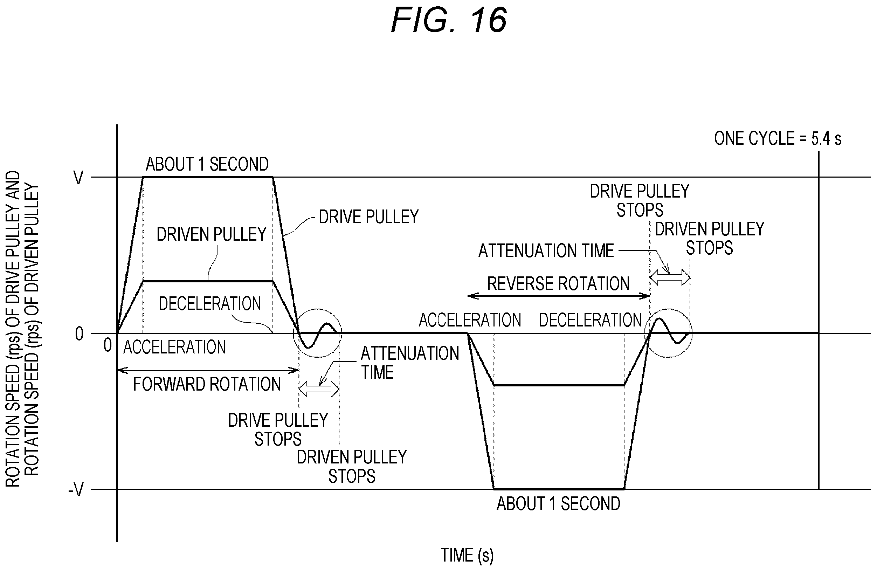

When compared with a case where the tension of the belt is kept relatively low (to an extent that the belt does not slack) and the two tension rollers are configured to be swingable about the swing shaft, so that a biasing force of a spring or the like is set relatively weak, and thus a load on the driven pulley (and further the moment of inertia of the driven pulley) is not very large (for example, a case where the load torque of the driven pulley in the belt power-transmission system for robot arm drive is about 1 N·m), the tension of the toothed belt increases on the tight side of the toothed belt, and the tension of the toothed belt decreases on the slack side of the toothed belt (the toothed belt becomes too loose) immediately after the drive pulley stops at the time of forward and reverse switching (at the time of stopping forward and reverse rotation). Therefore, immediately after the drive pulley stops, the two tension rollers connected (biased) by the spring cannot quickly displace (converge) to a balanced position (a state illustrated in FIG. 9 to be described later), that is, a belt position where a tension state is reached on the tight side of the toothed belt, and a belt position where slack on the slack side of the toothed belt is eliminated, each of the two tension rollers repeats forward and reverse swing in small increments about a swing shaft for a while in an aspect in which the tight side and the slack side of the toothed belt alternates in small increments, and in conjunction with this, as illustrated in circled areas in FIG. 16 (a graph of a time-series change in a rotation speed of the drive pulley and a rotation speed of the driven pulley at the time of forward and reverse switching (at the time of starting/stopping forward and reverse rotation)), the driven pulley also repeats forward and reverse rotation in small increments after overshoot or undershoot.

Therefore, in a belt power-transmission system, even if a load on the driven pulley (for example, a mass of an object subjected to robot arm drive) increases, in order to repeatedly ensure a positioning accuracy (to ensure synchronous power-transmission), it is important to "ensure an attenuation property of the driven pulley at the time of forward and reverse switching (at the time of stopping forward and reverse rotation) at a high level [to further ensure responsiveness to a drive at the time of forward and reverse switching at a high level (that is, sufficiently reduce a rotation angle difference between the drive pulley and the driven pulley at the time of forward and reverse switching)].

This is particularly important in a belt power-transmission system, such as a belt power-transmission system for robot arm drive in which a speed of an operation involving forward and reverse rotation is increasing dramatically as compared with the related art due to dramatically increased demands for improved productivity in automobile manufacturing, semiconductor manufacturing, smartphone manufacturing, and the like.

As a countermeasure to this, it is required to avoid that tension of a belt cannot be maintained (to an extent that the belt does not slack) appropriately (that is, the tension of the belt becomes excessive) by simply increasing a biasing force of a spring or the like.

Therefore, an object of the present invention is to provide a belt power-transmission system capable of ensuring synchronous power-transmission even if a load on a driven pulley increases.

### SOLUTION TO PROBLEM

The present invention relates to a belt power-transmission system including:
a drive pulley fixed to a drive shaft that is driven so as to be capable of forward and reverse rotation by a drive source;
a driven pulley rotatably supported;
a toothed belt wound between the drive pulley and the driven pulley; and
an automatic tensioner configured to automatically and appropriately maintain tension of the toothed belt via two tension rollers that are provided rotatably about respective base shaft portions at positions on both sides sandwiching a pulley center line connecting a rotation center of the drive pulley and a rotation center of the driven pulley, and are in contact with the toothed belt, in which
the automatic tensioner includes:
   a swing shaft that passes through a point on the pulley center line or a point on an extension line of the pulley center line and extends in a direction parallel to the drive shaft, the point being separated from an intersection point of the pulley center line and a roller center line connecting rotation centers of the two tension rollers; and
   a spring that biases the two tension rollers in a direction toward each other or a direction away from each other,
the two tension rollers are configured to be able to swing about the swing shaft,
the belt power-transmission system further includes a restriction unit configured to restrict swinging of the two tension rollers, and
the restriction unit is provided at a position that restricts the two tension rollers from swinging about the swing shaft in a direction opposite to a biasing direction of the spring from a balanced position where the drive pulley and the driven pulley are stopped.

According to the restriction unit having the above configuration, in the automatic tensioner, the two tension rollers cannot swing about the swing shaft together in the direction opposite to the biasing direction of the spring (for example, in a direction where the two tension rollers are separated from each other if the spring is a tension spring) from the balanced position where the drive pulley and driven pulley are stopped, but can swing only in the biasing direction of the spring.

Therefore, in the belt power-transmission system including an automatic tensioner in which a biasing force of the spring is set relatively weak and two tension rollers are configured to swing about a swing shaft, and configured to maintain tension of the toothed belt relatively low (low to an extent that the toothed belt does not slack), even if a load on the driven pulley (further, the moment of inertia of the driven pulley) increases, the tension of the toothed belt increases on the tight side of the toothed belt immediately after the drive pulley stops at the time of forward and reverse switching (at the time of stopping forward and reverse rotation), and even if the tension of the toothed belt decreases on the slack side of the toothed belt (even if the toothed belt becomes too slack), the tension roller located on the tight side of the toothed belt can be prevented from being pressed by the toothed belt and displacing (swinging about the swing shaft) toward the tight side of the toothed belt.

As a result, each of the two tension rollers connected (biased) by the spring can be prevent from swinging about the swing shaft in a direction where the tension roller located on the tight side of the toothed belt displaces toward the tight side of the toothed belt, and the tension roller located on the tight side can be prevented from displacing toward the tight side by adding the restriction unit, and as compared with a configuration not including the restriction unit, an amount of displacement of the tension roller located on the slack side from a neutral position to a position where the slack of the belt can be eliminated is minimized, and thus even if the biasing force of the spring is set relatively weak to maintain a relatively low tension of the toothed belt, at the slack side of the toothed belt, the tension roller located on the slack side of the toothed belt can quickly displace (swing about the swing shaft) to a position where the slack of the toothed belt can be eliminated while being biased by the spring in the direction where the slack of the toothed belt is eliminated (biasing direction of the spring).

Therefore, according to the present configuration, in the belt power-transmission system, even if the load on the driven pulley increases, immediately after the drive pulley stops at the time of forward and reverse switching (at the time of stopping forward and reverse rotation), each of the two tension rollers repeats forward and reverse swing in small increments about the swing shaft for a while in an aspect in which the tight side and the slack side of the toothed belt alternate in small increments, and in conjunction with this, the driven pulley can also be prevented from repeating forward and reverse rotation in small increments after overshoot or undershoot.

In other words, according to the present configuration, it is possible to ensure an attenuation property of the driven pulley at the time of forward and reverse switching (at the time of stopping forward and reverse rotation) at a high level [to further ensure responsiveness to a drive at the time of forward and reverse switching at a high level (that is, to sufficiently prevent a rotation angle difference between the drive pulley and driven pulley at the time of forward and reverse switching)]. That is, according to the present configuration, it is possible to ensure a positioning accuracy of the belt power-transmission system repeatedly (ensure synchronous power-transmission) even if the load on the driven pulley increases.

In the above belt power-transmission system of the present invention,
the automatic tensioner further includes:
   a first swing arm in which one end portion is provided with the base shaft portion of one of the tension rollers, and the other end portion is rotatably supported with respect to the swing shaft; and
   a second swing arm in which one end portion is provided with the base shaft portion of the other tension roller, and the other end portion is rotatably supported with respect to the swing shaft,
the two tension rollers are configured to swing about the swing shaft via the first swing arm and the second swing arm, and
the restriction unit is provided at a position where the restriction unit is capable of coming into contact with the first swing arm and the second swing arm.

According to the above configuration, each of the two swing arms (the first swing arm and the second swing arm) including, on one end portion (tip end portion), the base shaft portion of each of the two tension rollers biased by the spring is rotatable about the swing shaft, so that it is possible to specifically implement an aspect in which the two tension rollers swing about the swing shaft in addition to the biasing action of the spring, and the restriction unit restricts the two tension rollers from swinging about the swing shaft in the direction opposite to the biasing direction of the spring from the balanced position where the drive pulley and driven pulley are stopped.

In the above belt power-transmission system of the present invention,
the spring may be stretched on the roller center line between the base shaft portions of the two tension rollers and biases the two tension rollers.

According to the above configuration, as compared with a configuration in which the spring is not stretched between the base shaft portions of the two tension rollers, for example, on the slack side of the toothed belt, the biasing force of the spring can be applied with good response to a point of contact (point of action) between the tension roller and the toothed belt on the slack side in the direction where the slack of the toothed belt is eliminated (biasing direction of the spring). As a result, the responsiveness (operating speed) to the drive pulley of the two tension rollers can be further improved. In addition, the present configuration (stretching structure of the spring) can be formed simply.

In the above belt power-transmission system of the present invention,
the swing shaft is separated toward a driven pulley side from the intersection point of the roller center line and the pulley center line.

According to the above configuration, the drive pulley, the two tension rollers, the swing shaft, and the driven pulley can be arranged in this order. In this case, it is easier to set tension of the toothed belt to be lower than that in a case where the drive pulley, the swing shaft, the two tension rollers, and the driven pulley are arranged in this order, so that it is possible to easily ensure ease of installation of the toothed belt, a synchronous power-transmission property of the toothed belt, and tooth jump resistance of the toothed belt.

In the above belt power-transmission system of the present invention,
the two tension rollers may be provided on a drive pulley side or on a pulley side where the pulley has a smaller diameter out of the drive pulley and the driven pulley.

In the belt power-transmission system, in order to ensure rotational torque of the driven pulley at a predetermined level, a diameter of the drive pulley is generally smaller than a diameter of the driven pulley (when the belt power-transmission system functions as a so-called speed reduction system), but there are cases where the diameters of the drive pulley and the driven pulley are the same. For example, in the belt power-transmission system in which an interval between the pulleys is narrow and a speed reduction ratio (ratio of the pulley diameters) is large, a contact angle of the toothed belt is small in the drive pulley with a small diameter, and if the slack of the toothed belt is large, there is a concern that the tooth jump of the toothed belt is likely to occur, but according to the present configuration, in the drive pulley (including the case where the drive pulley and the driven pulley have the same diameter) or in the pulley with a smaller diameter (regardless of the drive or driven side), it is possible to prevent a decrease in the contact angle of the toothed belt, and thus the tooth jump of the toothed belt can be made to be difficult to occur.

In the above belt power-transmission system of the present invention,
the spring may be a tension spring, and
the two tension rollers may be provided so as to be in contact with an outer circumferential surface of the toothed belt.

According to the above configuration, both sides (a tight side and a slack side) of the belt are sandwiched between the two tension rollers by the biasing action of one spring (the tension spring). Therefore, as compared with a configuration in which the spring is a compression spring and the two tension rollers are provided so as to be in contact with an inner circumferential surface of the toothed belt (in a case of an aspect in which both sides of the belt are pressed and widened by the two tension rollers by a biasing action of one compression spring), occurrence of a tooth jump of the belt can be prevented by increasing a contact angle of the belt (a central angle with respect to an arc where the belt and the pulley are in contact with each other).

In the above belt power-transmission system of the present invention,
a diameter of the drive pulley may be smaller than a diameter of the driven pulley.

According to the above configuration (that is, in the case where the belt power-transmission system is the speed reduction system), compared with the case where the diameter of the drive pulley is the same as the diameter of the driven pulley, the two tension rollers swing about the swing shaft at the time of forward and reverse switching, thereby increasing a degree of displacement.

Therefore, according to the configuration, compared with a configuration in which the two tension rollers cannot swing about the swing shaft (only the biasing force of the spring acts on the two tension rollers) and the two tension rollers can be displaced only in a direction orthogonal to the pulley center line when viewed in a direction parallel to the drive shaft, it is possible to further increase an effect that one of the tension rollers can be more quickly displaced by swinging about the swing shaft while preventing attenuation by the spring (displacement in a direction for resisting the biasing force of the spring) on the tight side of the belt. Further, in the belt power-transmission system, the responsiveness to the drive at the time of forward and reverse switching (at the time of starting/stopping forward and reverse rotation) can be ensured at a higher level.

In the above belt power-transmission system of the present invention,
the drive pulley and the driven pulley are fixed to a robot arm and drive the robot arm.

According to the above configuration, when the robot arm is driven, even if the load on the driven pulley increases in the belt power-transmission system, the attenuation property of the driven pulley at the time of forward and reverse switching (at the time of stopping forward and reverse rotation) can be ensured at a high level, a positioning accuracy of the robot arm can be repeatedly ensured (that is, magnitude of a difference of the rotation angles between the drive pulley and the driven pulley can be constantly kept within an allowable range), and synchronous power-transmission can be ensured.

### ADVANTAGEOUS EFFECTS OF INVENTION

It is possible to provide a belt power-transmission system capable of ensuring synchronous power-transmission even if a load on a driven pulley increases.

### BRIEF DESCRIPTION OF DRAWINGS

FIG. 1 is a diagram illustrating a belt power-transmission system for robot arm drive according to the present embodiment incorporated in a robot arm of a horizontal articulated robot.
FIG. 2 is a plan view of the belt power-transmission system for robot arm drive according to the present embodiment (a diagram illustrating a state in which a drive pulley is stopped).
FIG. 3 is a cross-sectional view/left side view taken along a line A-A in FIG. 2.
FIG. 4 is a cross-sectional view taken along a line B-B in FIG. 2.
FIG. 5 is a plan view of the belt power-transmission system for robot arm drive according to the present embodiment (a diagram illustrating an operation state of an automatic tensioner at the time of forward and reverse switching (at the time of starting)).
FIG. 6 is a plan view of the belt power-transmission system for robot arm drive according to the present embodiment (a diagram illustrating an operation state of the automatic tensioner at the time of forward and reverse switching (at the time of stopping)).
FIG. 7 is a plan view of a belt power-transmission system for robot arm drive according to Comparative Example 1 (a diagram illustrating a state in which a drive pulley is stopped).
FIG. 8 is a plan view of the belt power-transmission system for robot arm drive according to Comparative Example 1 (a diagram illustrating an operation state of an automatic tensioner at the time of forward and reverse switching (at the time of starting)).
FIG. 9 is a plan view of the belt power-transmission system for robot arm drive according to Comparative Example 1 (a diagram illustrating an operation state of the automatic tensioner at the time of forward and reverse switching (at the time of stopping)).
FIG. 10 is a plan view of a belt power-transmission system for robot arm drive according to Example 2 (a diagram illustrating a state in which a drive pulley is stopped).
FIG. 11 is a plan view of a belt power-transmission system for robot arm drive according to another embodiment (a diagram illustrating a state in which a drive pulley is stopped).
FIG. 12 is a plan view of the belt power-transmission system for robot arm drive in which a pin is used as a restriction unit.
FIG. 13 is a cross-sectional perspective view of a toothed belt according to the present embodiment.
FIG. 14 is a diagram illustrating a responsiveness evaluation tester according to evaluation of Example (attenuation property and responsiveness tests).
FIG. 15 is a diagram illustrating a test pattern (cycle pattern) of a responsiveness test according to the evaluation of Example (attenuation property and responsiveness tests).
FIG. 16 is a graph illustrating a time series change of a rotation speed of a drive pulley and a rotation speed of a driven pulley at the time of forward and reverse switching (at the time of starting/stopping forward and reverse rotation) of a belt power-transmission system in the related art (Comparative Example).
FIG. 17 is a graph illustrating a time series change of a rotation speed of a drive pulley and a rotation speed of a driven pulley at the time of forward and reverse switching (at the time of starting/stopping forward and reverse rotation) of the belt power-transmission system in the present embodiment.
FIG. 18 is a plan view and a side view of a restriction member according to the present embodiment.
FIG. 19 is a cross-sectional view taken along a line A-A and a front view of the restriction member of FIG. 18.

### DESCRIPTION OF EMBODIMENTS

### (Embodiments)

The present embodiment is an example of applying the present invention to a belt power-transmission system for robot arm drive 1 (hereinafter, simply referred to as the "belt power-transmission system 1" in some cases) which is incorporated in a second arm 11 of a horizontal articulated robot 10 (industrial robot) called a SCARA robot and provided with an automatic tensioner 5 for automatically and appropriately maintaining tension of a toothed belt 4 when a rotational force of a drive pulley 2 is transmitted to a driven pulley 3 via the toothed belt 4.

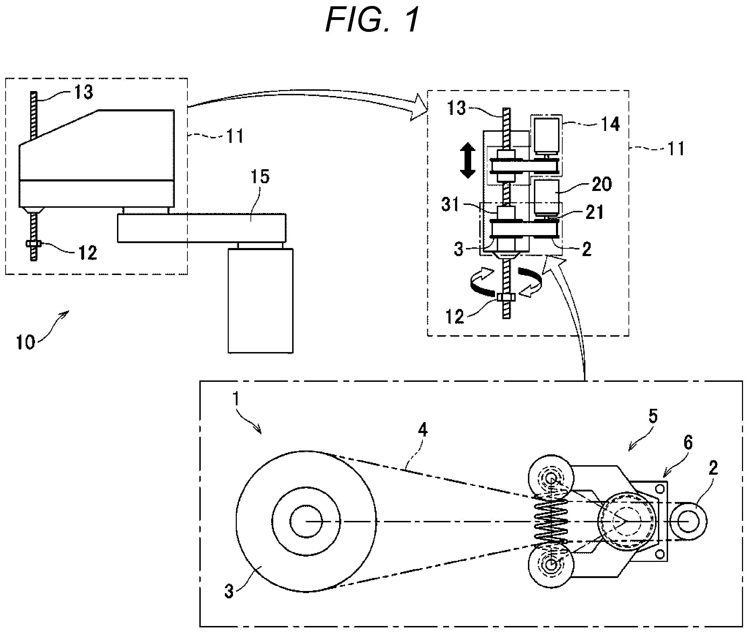

For example, as illustrated in FIG. 1, the belt power-transmission system 1 of the present embodiment is incorporated as a belt-type speed reduction system for driving forward and reverse rotation of a ball screw spline shaft 13 via a driven shaft 31 coaxial with the ball screw spline shaft 13, the ball screw spline shaft 13 being provided to be movable up and down and rotatable coaxially with a wrist portion 12 (not illustrated in detail) which is detachably attached to a lower end side in a tip end portion of the second arm 11 of the horizontal articulated robot 10 and extends in an up-down direction. The up-down movement of the ball screw spline shaft 13 is performed by an up-down movement drive system 14. The belt power-transmission system 1 incorporated as a belt-type speed reduction system can drive forward and reverse rotation of the ball screw spline shaft 13 while allowing the up-down movement of the ball screw spline shaft 13 by the up-down movement drive system 14 and in a non-rotation state.

### (Belt Power-Transmission System 1)

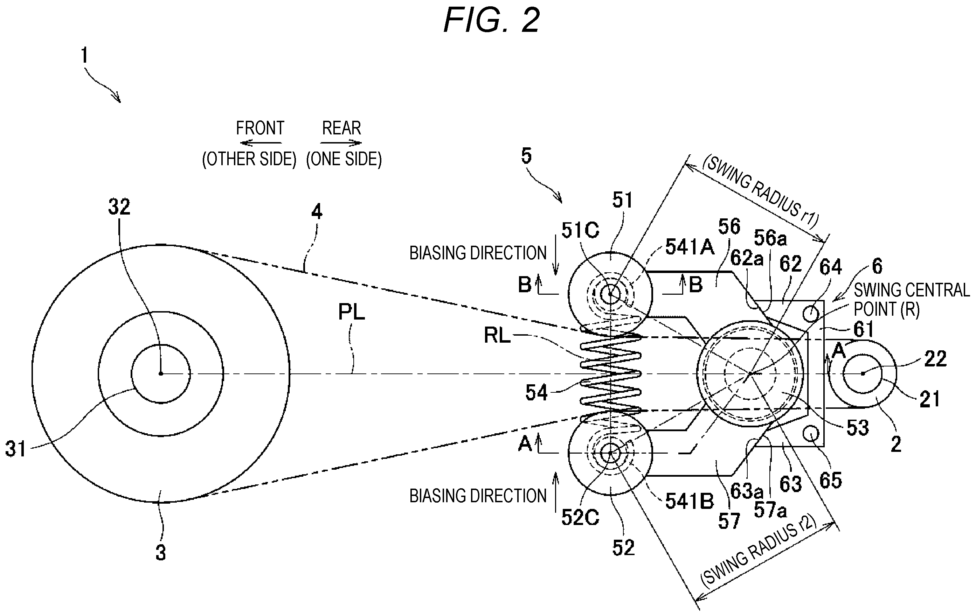

As illustrated in FIG. 1 and FIG. 2, the belt power-transmission system 1 includes: the drive pulley 2 that is disposed at a rear side (end portion on one side) of the second arm 11 and transmits a driving force of a servo motor 20 (a drive source: a servo motor provided in a first stage belt-type speed reduction system when applied to a second stage system of a two-stage speed reduction method) via a drive shaft 21 (a drive shaft of a second stage belt-type speed reduction system, extending coaxially with a driven shaft (not illustrated) of the first stage belt-type speed reduction system when applied to the second stage system of the two-stage speed reduction method); the driven pulley 3 that is disposed on a front side (end portion on the other side) of the second arm 11 and transmits a driving force to a driven shaft 31 connected to the ball screw spline shaft 13 to which the wrist portion 12 is mounted; the toothed belt 4 that is endlessly wound between the drive pulley 2 and the driven pulley 3; the automatic tensioner 5 that automatically and appropriately maintains tension of the toothed belt 4 via a first tension roller 51 and a second tension roller 52 which are rotatably provided; and a restriction member 6 (restriction unit) that restricts swinging of the first tension roller 51 and the second tension roller 52.

In FIG. 1, a base end side (a side connected to a first arm 15) of the second arm 11 is referred to as the rear side (one side), and a tip end side (a side connected to the ball screw spline shaft 13 to which the wrist portion 12 is mounted) of the second arm 11 is referred to as the front side (the other side).

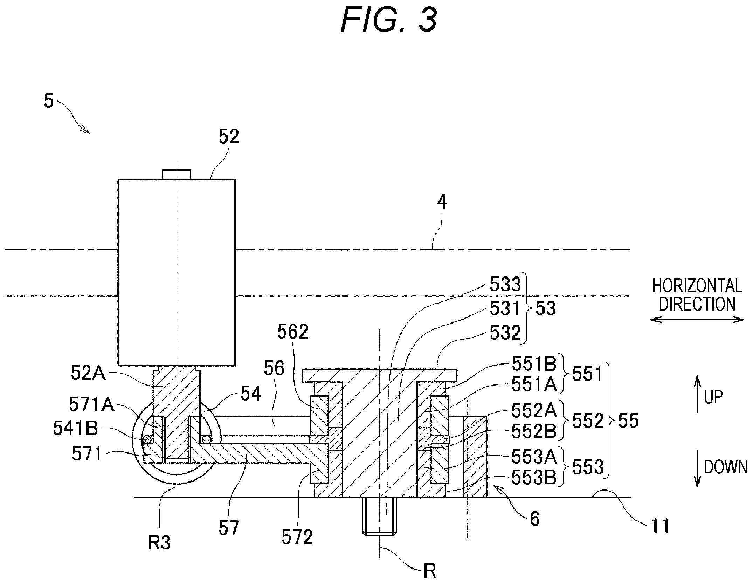

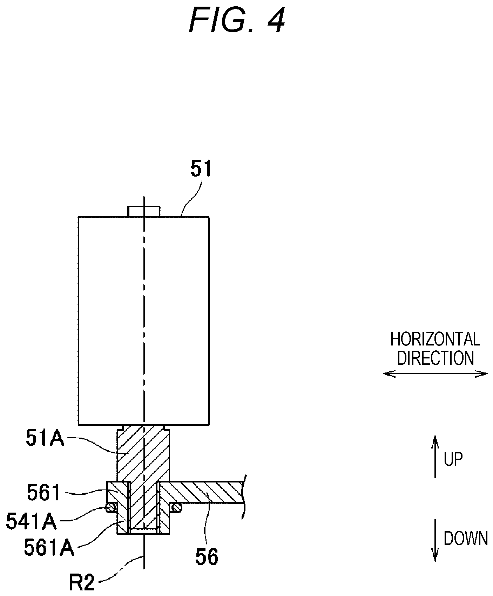

In FIG. 2, a left side is defined as the front (the other side), and a right side is defined as the rear (one side). In FIG. 3, a radial direction about a central axis R of a swing shaft 53 is simply defined as a radial direction, and a circumferential direction about the central axis R is simply defined as a circumferential direction. In FIG. 3 and FIG. 4, the up-down direction is defined as the up-down direction, and a left-right direction is defined as a horizontal direction.

### (Drive Pulley 2 and Driven Pulley 3)

The drive pulley 2 is fixed to the drive shaft 21 that is driven by the driving force of the servo motor 20 so as to be capable of forward and reverse rotation. The driven pulley 3 is fixed to the driven shaft 31 to which the ball screw spline shaft 13 is connected.

The drive pulley 2 and the driven pulley 3 are toothed pulleys. Grooves (not illustrated) each having a shape corresponding to a tooth shape (for example, a tooth shape referred to as a general straight tooth) of a tooth portion of the toothed belt 4 are formed on outer circumferences of the drive pulley 2 and the driven pulley 3. In the present embodiment, the grooves formed on the outer circumferences of the drive pulley 2 and the driven pulley 3 have a shape corresponding to the straight tooth and extend in a direction of the driven shaft 31.

An intershaft distance between the drive pulley 2 and the driven pulley 3 is fixed and cannot be adjusted, and is, for example, about 80 mm to 300 mm (220 mm in the present embodiment).

A speed ratio of the drive pulley 2 and the driven pulley 3 (a diameter of the driven pulley 3/a diameter of the drive pulley 2) is, for example, about 1 to 4. In the present embodiment, the driven pulley 3 has a pitch diameter about four times larger than that of the drive pulley 2 so that the speed ratio (speed reduction ratio) is 4.

Tension of the belt when the toothed belt 4 is stationary (tension of the belt when the drive pulley 2 is stopped) is, for example, about 1 N/belt 1 mm width to 5 N/belt 1 mm width (in the present embodiment, 5 N/belt 1 mm width) at a level at which the toothed belt 4 does not slack.

An allowable range of a rotation angle difference between the drive pulley 2 and the driven pulley 3 (maximum at the time of forward and reverse switching) is determined by a design aspect. The above "rotation angle difference" is an index (substitute characteristic) representing responsiveness, and is "magnitude of a difference in rotation angles (°) of the drive pulley and the driven pulley".

### (Toothed Belt 4)

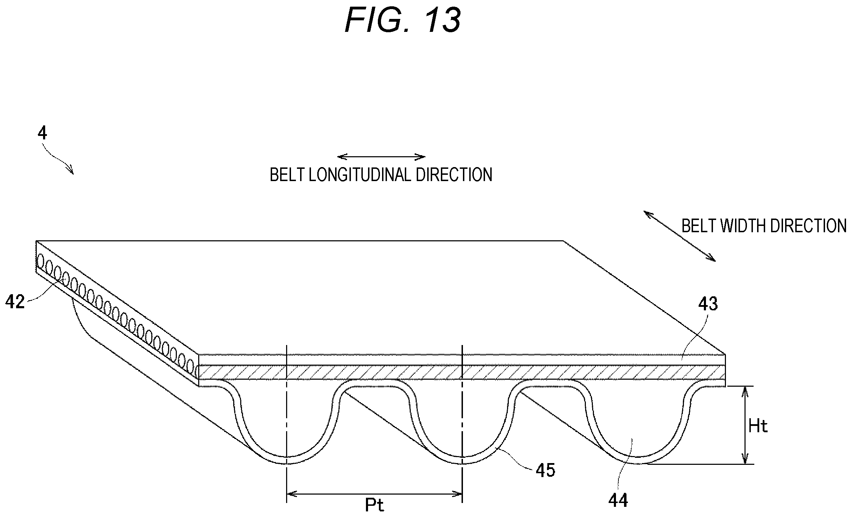

As illustrated in FIG. 13, the toothed belt 4 includes a back portion 43 in which tension members 42 are spirally embedded along a belt longitudinal direction, and a plurality of tooth portions 44 arranged at predetermined intervals along the belt longitudinal direction on an inner circumferential surface of the back portion 43 (corresponding to the surface on one side of the back portion 43). In the present embodiment, the plurality of tooth portions 44 are integrally formed on the inner circumferential surface of the back portion 43. Each of the tooth portions 44 extends along a belt width direction (that is, the tooth portion 44 is a straight tooth). An inner circumferential surface of the toothed belt 4, that is, a surface of the tooth portion 44 and a part (a portion where the tooth portion 44 is not provided) of the inner circumferential surface of the back portion 43 are composed of (covered with) the tooth fabric 45. An outer circumferential surface of the back portion 43 (corresponding to the other surface of the back portion 43) is not covered with fabric or the like (backing fabric).

An interval (tooth pitch Pt) between the tooth portions 44 adjacent to each other in the belt longitudinal direction is preferably a relatively small value, for example, about 2 mm to 5 mm (in the present embodiment, 3 mm) from a viewpoint of repeatedly ensuring a positioning accuracy (ensuring synchronous power-transmission) even if a speed of an operation involving forward and reverse rotation increases. The numerical value of the tooth pitch Pt also corresponds to a size of a scale of the tooth portion 44 (a length of the tooth portion 44 in the belt longitudinal direction and a tooth height Ht of the tooth portion 44). That is, the larger the tooth pitch Pt is, similarly the larger the scale of the tooth portion 44 is.

The length (circumferential length) of the toothed belt 4 in the belt longitudinal direction is, for example, about 200 mm to 800 mm (about 600 mm in the present embodiment).

A length (width) of the toothed belt 4 in the belt width direction is, for example, about 6 mm to 35 mm (10 mm in the present embodiment).

### (Back Portion 43 and Tooth Portion 44)

The back portion 43 and the tooth portion 44 of the toothed belt 4 are made of a rubber composition, and as a rubber component of the rubber composition, chloroprene rubber (CR), nitrile rubber, hydrogenated nitrile rubber (HNBR), ethylene-propylene copolymer (EPM), ethylene-propylene-diene terpolymer (EPDM), styrene-butadiene rubber, butyl rubber, chlorosulfonated polyethylene rubber, or the like is used. These rubber components may be used alone or in combination. The rubber components of the rubber compositions constituting the back portion 43 and the tooth portion 44 are preferably chloroprene rubber from a viewpoint of particularly low cost (chloroprene rubber in the present embodiment). The rubber compositions constituting the tooth portion 44 and the back portion 43 may be made of the same rubber composition or different rubber compositions. The rubber compositions constituting the back portion 43 and the tooth portion 44 may contain various commonly used additives (or compounding agents) as necessary. Hardness of the rubber composition (tooth rubber) constituting the tooth portion 44 is preferably about 73° to 83° as a hardness measured using a type A durometer at an atmospheric temperature of 23°C (23°C ± 2°C) in accordance with JIS K6253 (2012) from a viewpoint of ensuring transmission performance (particularly tooth jump resistance) of the toothed belt 4.

### (Tooth Shape of Tooth Portion 44)

The tooth shape of the tooth portion 44 of the toothed belt 4 may be a tooth shape referred to as a general straight tooth or a tooth shape referred to as a helical tooth (tooth with an oblique contact angle of a tooth surface) as long as synchronous power-transmission (meshing transmission) is possible. The toothed belt 4 used in the belt power-transmission system 1 of the present embodiment has straight teeth.

As the tooth shape belonging to the straight tooth, it is possible to appropriately select a tooth shape suitable for an application of the belt power-transmission system, such as a well-known tooth shape as described below, a deformed shape thereof, or a special shape. Examples include a shape referred to as an H-tooth shape having a substantially semicircular cross section, a shape referred to as a T-tooth shape having a trapezoidal cross section, and a shape referred to as an S-tooth shape (STPD type) in which two side surfaces each including a convex curved surface (arc surface) bulging outward are connected by a flat surface. From a viewpoint of ensuring transmission performance (particularly a transmission capability and tooth jump resistance) of the toothed belt 4, it is preferable to increase a rigidity of the tooth portion 44, and it is preferable that the tooth shape is an H-tooth shape (a shape having a substantially semicircular cross-section) (H-tooth shape also in the present embodiment).

### (Tension Member 42)

The tension member 42 is constituted by a twisted cord formed by twisting a plurality of strands. One strand may be formed by bundling and aligning filaments (long fibers). From a viewpoint of enhancing the responsiveness to the drive at the time of forward and reverse switching in the belt power-transmission system 1, a material of the filament is preferably high strength (high elastic modulus) and low elongation, and examples thereof include an alkali-free glass fiber (E glass fiber), a high-strength glass fiber, or a carbon fiber. From a viewpoint of low cost, an alkali-free glass fiber (E glass fiber) is more preferable. A diameter of the tension member 42 is preferably small from a viewpoint of improving bendability of the toothed belt 4 (flexibility of the toothed belt 4 when the toothed belt 4 is wound across the drive pulley 2 and the driven pulley 3), that is, from a viewpoint of preventing speed unevenness of the toothed belt 4 due to up-down movement of a belt pitch line and ensuring a high positioning accuracy. The diameter of the tension member 42 is, for example, about 0.15 mm to 0.60 mm (in the present embodiment, a tension member diameter is 0.35 mm when the tension member type is an E glass fiber and a K glass fiber, and a tension member diameter is 0.53 mm when the tension member type is carbon fiber).

As the high-strength glass fiber, for example, a glass fiber having a tensile strength of 300 kg/cm² or more, in particular, a glass fiber having a higher content of Si component than that of the alkali-free glass fiber (E glass fiber) as shown in Table 1 can be suitably used.

Table 1 also shows the composition of the E glass fiber for comparison. Examples of such a high-strength glass fiber include a K glass fiber, a U glass fiber (both manufactured by Nippon Glass Fiber Co., Ltd.), a T glass fiber (manufactured by Nitto Boseki Co., Ltd.), an R glass fiber (manufactured by Vetrotex), an S glass fiber, an S-2 glass fiber, and a ZENTRON glass fiber (all manufactured by Owens Corning Fiberglass).

**Table 1**

| Component item | High-strength glass fiber | E glass fiber |
|---|---|---|
| SiO₂ | 58 to 70 | 52 to 56 |
| Al₂O₃ | 17 to 27 | 12 to 16 |
| MgO | 7 to 17 | 0 to 6 |
| CaO | 0 to 10 | 12 to 25 |
| Na₂O | 0 to 2 | 0 to 0.8 |
| K₂O | 0 to 2 | 8 to 13 |
| B₂O₃ | 0 to 2 | |
| | Including impurities such as Fe₂O₃ and TiO₂ | |

Examples of the carbon fiber include a pitch-based carbon fiber, a polyacrylonitrile (PAN)-based carbon fiber, a phenolic resin-based carbon fiber, a cellulose-based carbon fiber, and a polyvinyl alcohol-based carbon fiber. Examples of a commercially available product of the carbon fiber include "Torayca (registered trademark)" manufactured by Toray Industries, Inc., "Tenax (registered trademark)" manufactured by Toho Tenax Co., Ltd., and "DIALEAD (registered trademark)" manufactured by Mitsubishi Chemical Corporation. These carbon fibers may be used alone or in combination of two or more thereof. Among these carbon fibers, the pitch-based carbon fiber and the PAN-based carbon fiber are preferable, and the PAN-based carbon fiber is particularly preferable.

The twisted cord used as the tension member 42 is preferably subjected to an adhesion treatment in order to enhance the adhesion to the back portion 43. As the adhesion treatment, for example, a method is adopted in which the twisted cord is immersed in a resorcin-formalin-latex treatment liquid (RFL treatment liquid) and then heated and dried to uniformly form an adhesion layer on a surface. The RFL treatment liquid is obtained by mixing an initial condensate of resorcin and formalin with latex, and examples of the latex used here include chloroprene, styrene-butadiene-vinylpyridine ternary copolymer (VP latex), hydrogenated nitrile, and NBR. Examples of the adhesion treatment include a method in which a pretreatment is performed with an epoxy or isocyanate compound, and then a treatment is performed with the RFL treatment liquid.

The tension members 42 are spirally embedded in the back portion 43 along the belt longitudinal direction at a predetermined interval in the belt width direction. That is, the tension members 42 are arranged in the back portion 43 at the predetermined interval in the belt width direction.

### (Tooth Fabric 45)

From a viewpoint of wear resistance and the like, the tooth fabric 45 is preferably formed of woven fabric woven by intersecting warp yarns and weft yarns vertically and horizontally according to a certain rule. In the tooth fabric 45, it is preferable to arrange the warp yarns of the woven fabric in the belt width direction and the weft yarns in the belt longitudinal direction. Accordingly, elasticity of the tooth fabric 45 in the belt longitudinal direction can be ensured. The tooth fabric 45 may be arranged such that the weft yarn of the woven fabric extends in the belt width direction and the warp yarn extends in the belt longitudinal direction. In this case, an elastic yarn having elasticity may be used as the warp yarn. As a material of the fiber constituting the tooth fabric 45, any one or a combination of nylon, aramid, polyester, polybenzoxazole, cotton, and the like can be adopted.

The woven fabric used as the tooth fabric 45 may be subjected to the adhesion treatment in order to enhance adhesion to the back portion 43 and the tooth portion 44. As the adhesion treatment, a method in which the woven fabric is immersed in resorcin-formalin-latex (RFL liquid) and then heated and dried to uniformly form an adhesion layer on the surface is generally used.

### (Method for Producing Toothed Belt 4)

The toothed belt 4 according to the present embodiment is produced by, for example, the following method (press-fitting method). First, fiber fabric forming the tooth fabric 45 is wound around an outer circumferential surface of a cylindrical mold having a plurality of grooves (recessed strips) corresponding to the tooth portions 44 of the toothed belt 4. Subsequently, the twisted cord constituting the tension member 42 is spirally wound around the outer circumferential surface of the wound fiber fabric at a predetermined pitch (so as to have a predetermined pitch in an axial direction of the cylindrical mold). Further, an unvulcanized rubber sheet for forming the back portion 43 and the tooth portion 44 is wound around the outer circumferential side thereof to form an unvulcanized belt molded body (unvulcanized laminate).

Next, in a state in which the unvulcanized belt molded body is disposed on the outer circumference of the cylindrical mold, a rubber jacket which is a vapor blocking material is further covered on the outside of the unvulcanized belt molded body. Subsequently, the cylindrical mold and the belt molded body covered with the jacket are accommodated in a vulcanization device such as a vulcanization can. Then, when the belt molded body is heated and pressurized inside the vulcanization device, the rubber composition of the unvulcanized rubber sheet and the fiber fabric are pressed into the grooves (recessed strips) of the cylindrical mold to form tooth portions having a desired shape, and the rubber composition of the unvulcanized rubber sheet is vulcanized to form a sleeve-shaped vulcanized molded body (vulcanized belt sleeve) in which the rubber composition, the fiber fabric, and the tension member are integrated. In this case, the fiber fabric extends along a contour shape of the tooth portion 44 to become the tooth fabric 45 disposed on the surface of the tooth portion 44. A plurality of toothed belts 4 are obtained by cutting the vulcanized belt sleeve removed from the cylindrical mold to a predetermined width. In this method (press-fitting method), the same rubber composition is used as the rubber composition constituting the back portion 43 and the tooth portion 44.

### (Automatic Tensioner 5)

As illustrated in FIG. 2 to FIG. 4, the automatic tensioner 5 includes: the swing shaft 53 fixed to a casing of the second arm 11; a first swing arm 56 in which a first base shaft portion 51A rotatably supporting the first tension roller 51 is provided at a tip end portion 561 (corresponds to one end portion of the first swing arm 56) and a base end portion 562 (corresponds to the other end portion of the first swing arm 56) is rotatably supported with respect to the swing shaft 53; a second swing arm 57 in which a second base shaft portion 52A rotatably supporting the second tension roller 52 is provided at a tip end portion 571 (corresponds to one end portion of the second swing arm 57) and a base end portion 572 (corresponds to the other end portion of the second swing arm 57) is rotatably supported with respect to the swing shaft 53; and a spring 54 that biases the first base shaft portion 51A and the second base shaft portion 52A in a direction toward each other along a roller center line RL connecting a rotation center 51C of the first tension roller 51 and a rotation center 52C of the second tension roller 52.

In the present embodiment, in the automatic tensioner 5, the two tension rollers (the first tension roller 51 and the second tension roller 52) are provided not on a driven pulley 3 side but on a drive pulley 2 side. In the automatic tensioner 5, the two tension rollers (the first tension roller 51 and the second tension roller 52) may be provided on a pulley side where the pulley has a smaller diameter out of the drive pulley 2 and the driven pulley 3. Here, "the two tension rollers are provided on the drive pulley 2 side" means that an intersection point of the roller center line RL and a pulley center line PL is located on the drive pulley 2 side with respect to a center of the pulley center line PL.

### (First Tension Roller 51 and Second Tension Roller 52)

The first tension roller 51 is a cylindrical roller member rotatably (swingably) supported about a central axis R2 by the first base shaft portion 51A via a rolling bearing (not illustrated). The second tension roller 52 is also a cylindrical roller member rotatably (swingably) supported about a central axis R3 by the second base shaft portion 52A via a rolling bearing (not illustrated).

As illustrated in FIG. 2, the first tension roller 51 and the second tension roller 52 are provided on the drive pulley 2 side and are provided rotatably about the first base shaft portion 51A and the second base shaft portion 52A, respectively, at positions on both sides sandwiching the pulley center line PL connecting a rotation center 22 of the drive pulley 2 and a rotation center 32 of the driven pulley 3, and the first tension roller 51 and the second tension roller 52 can come into contact with an outer circumferential surface of the toothed belt 4.

### (First Base Shaft Portion 51A and Second Base Shaft Portion 52A)

As illustrated in FIG. 3 and FIG. 4, the first base shaft portion 51A is a base end portion that supports the first tension roller 51 via the rolling bearing (not illustrated) so as to be rotatable about the central axis R2.

In the first base shaft portion 51A, a male threaded portion to be inserted into a hole (a female threaded portion) provided in the tip end portion 561 of the first swing arm 56 to be described later extends downward.

Similarly, as illustrated in FIG. 3, the second base shaft portion 52A is a base end portion that rotatably supports the second tension roller 52 about the central axis R3 via the rolling bearing (not illustrated).

In the second base shaft portion 52A, a male threaded portion to be inserted into a hole (a female threaded portion) provided in the tip end portion 571 of the second swing arm 57 to be described later extends downward.

The spring 54 to be described later is stretched between the first base shaft portion 51A and the second base shaft portion 52A.

### (Swing Shaft 53)

As illustrated in FIG. 3, the swing shaft 53 is a metal component including a cylindrical trunk portion 531 extending in the up-down direction, a flange portion 532 extending outward in the radial direction from an upper end of the trunk portion 531, and a fastening portion 533 extending below from the center portion of the end surface at a lower portion (lower end surface) of the trunk portion 531, and obtained by integrally forming these portions.

As illustrated in FIG. 2, the swing shaft 53 is fixed to the casing (female threaded portion) of the second arm 11 of the horizontal articulated robot 10 via the fastening portion 533 (male threaded portion) such that the central axis R (swing central point) of the swing shaft 53 passes through a point on the pulley center line PL (which may be a point on an extension line of the pulley center line PL) separated toward the drive pulley 2 side from the intersection point of the pulley center line PL and the roller center line RL connecting the rotation center 51C of the first tension roller 51 and the rotation center 52C of the second tension roller 52, and extends in a direction parallel to the drive shaft 21. An outer circumferential surface of the trunk portion 531 and a lower end surface of the flange portion 532 of the swing shaft 53 are in surface contact with a sliding member 55 (bearing), and the first swing arm 56 and the second swing arm 57 are rotatably supported via the sliding member 55 (bearing).

### (Spring 54)

The spring 54 is a tension spring in the present embodiment.

The tension spring is stretched on the roller center line RL between the first base shaft portion 51A and the second base shaft portion 52A in a state in which the tension spring is tensioned in a direction where the tension spring becomes longer than a natural length thereof (a state in which a self-elastic recovery force acts in a contraction direction), and biases the first base shaft portion 51A and the second base shaft portion 52A in a direction toward each other along the roller center line RL (on the roller center line RL). That is, the spring 54 biases the first tension roller 51, which is rotatably provided on the first base shaft portion 51A, and the second tension roller 52, which is rotatably provided on the second base shaft portion 52A, in a direction toward each other along the roller center line RL (on the roller center line RL).

As illustrated in FIG. 2, the tension spring is employed when the first tension roller 51 and the second tension roller 52 are used in a manner of being in contact with the outer circumferential surface of the toothed belt 4.

A compression spring may be employed as the spring 54. The compression spring is mounted between the first base shaft portion 51A and the second base shaft portion 52A in a state in which the compression spring is compressed in a direction where the compression spring becomes shorter than a natural length thereof (a state in which a self-elastic recovery force acts in an extending direction), and is used when the first base shaft portion 51A and the second base shaft portion 52A are biased in a direction away from each other along the roller center line RL. Specifically, the compression spring is employed when the first tension roller 51 and the second tension roller 52 are disposed at an inner circumferential side of the toothed belt 4, and the first tension roller 51 and the second tension roller 52 are in contact with the inner circumferential surface of the toothed belt 4.

As in the present embodiment, when a tension spring is used as the spring 54, the two tension rollers (the first tension roller 51 and the second tension roller 52) sandwich both sides (the tight side and the slack side) of the toothed belt 4 by a biasing action of one spring 54 (tension spring). Therefore, as compared with a configuration in which the spring 54 is a compression spring and the two tension rollers (the first tension roller 51 and the second tension roller 52) are provided to come into contact with the inner circumferential surface of the toothed belt 4 (a case of an aspect in which both sides of the toothed belt 4 are pressed and widened by the two tension rollers by a biasing action of one compression spring), a contact angle of the toothed belt 4 (a central angle with respect to an arc where the belt and the pulley come into contact with each other) becomes large, and thus it is possible to prevent the tooth jump of the toothed belt 4 from occurring.

The spring 54 is preferably a coil spring so that predetermined spring characteristics can be repeatedly obtained for each belt power-transmission system 1, and a coil spring is also used in the present embodiment.

A spring wire is preferably a spring oil-tempered wire having a circular cross section or the like in accordance with JIS G3560: 1994, and the present embodiment employs a spring oil-tempered wire having a circular cross section according to the above standard.

A diameter of the spring wire and a winding diameter and a winding length (natural length) of the spring are designed and determined such that predetermined spring characteristics are repeatedly obtained for each belt power-transmission system 1 (particularly, for each level of tension of the belt).

In the present embodiment, in order to facilitate stretching of the spring 54 between the first base shaft portion 51A and the second base shaft portion 52A, both end portions (hereinafter, referred to as the "spring end portions 541A and 541B") of the spring 54 corresponding to substantially one turn parts of the ends of the spring 54 are bent by about 90° in the same direction.

In this way, the present configuration (stretching structure of the spring 54) can be formed simply.

### (First Swing Arm 56 and Second Swing Arm 57)

The first swing arm 56 and the second swing arm 57 are metal components independent of each other and made of an aluminum alloy casting (for example, ADC12) or the like.

As illustrated in FIG. 3, the base end portion 562 of the first swing arm 56 is rotatably supported by the swing shaft 53 (via the sliding member 55 (bearing) to be described later).

Similarly, as illustrated in FIG. 3, the base end portion 572 of the second swing arm 57 is also rotatably supported by the swing shaft 53 (via the sliding member 55 (bearing) to be described later).

As illustrated in FIG. 2, the first swing arm 56 and the second swing arm 57 are formed to be a substantially C-shape as a whole when viewed from above in a state of being provided in the belt power-transmission system 1 as the automatic tensioner 5.

### (Tip End Portion 561 and Tip End Portion 571)

As illustrated in FIG. 4, a convex portion 561A that protrudes downward (below the lower end surface of the arm portion between the tip end portion 561 and the base end portion 562) in a cylindrical shape about the axis R2 (the central axis of the first tension roller 51) is formed in the tip end portion 561 of the first swing arm 56. A female threaded portion is formed in a hole which penetrates the tip end portion 561 in the up-down direction about the axis R2, including the convex portion 561A. A spring end portion 541A of the spring 54 is inserted into the convex portion 561A from below, and is engaged with an outer circumferential portion of an upper end (base) of the convex portion 561A.

Accordingly, at the tip end portion 561 of the first swing arm 56, the first base shaft portion 51A (a main body of the male threaded portion) is fixed by a hinge from above, so that the spring end portion 541A is engaged with the first base shaft portion 51A via the convex portion 561A.

As illustrated in FIG. 3, a convex portion 571A that protrudes upward in a cylindrical shape about the axis R3 (the central axis of the second tension roller 52) (above the upper end surface of the arm portion between the tip end portion 571 and the base end portion 572) is formed in the tip end portion 571 of the second swing arm 57. A female threaded portion is formed in a hole which penetrates the tip end portion 571 in the up-down direction about the axis R3, including the convex portion 571A. A spring end portion 541B of the spring 54 is inserted into the convex portion 571A from above, and is engaged with an outer circumferential portion of a lower end (base) of the convex portion 571A.

Accordingly, at the tip end portion 571 of the second swing arm 57, the second base shaft portion 52A (a main body of the male threaded portion) is fixed by a hinge from above, so that the spring end portion 541B is engaged with the second base shaft portion 52A via the convex portion 571A.

According to the above configuration, the first base shaft portion 51A rotatably supporting the first tension roller 51 is fixed (by a hinge) to the tip end portion 561 of the first swing arm 56 so as not to be movable.

Similarly, the second base shaft portion 52A rotatably supporting the second tension roller 52 is fixed (by a hinge) to the tip end portion 571 of the second swing arm 57 so as not to be movable.

The spring end portion 541A is inserted through the first base shaft portion 51A, and the spring end portion 541B is inserted through the second base shaft portion 52A, so that the spring 54 is stretched between the first base shaft portion 51A and the second base shaft portion 52A in a state in which engagement positions of the spring end portions 541A and 541B are on the same plane in a side view (do not shift in the up-down direction) and the spring end portions 541A and 541B cannot fall off (see FIG. 3).

### (Base End Portion 562 and Base End Portion 572)

The base end portion 562 of the first swing arm 56 has a flange shape extending upward, and is formed in a cylindrical shape when viewed from above. Specifically, as illustrated in FIG. 3, an upper end surface of the base end portion 562 extends upward to a position where the upper end surface of the base end portion 562 can come into contact with a lower end surface of a plate-shaped portion 551B extending outward in the radial direction from an upper end of a cylindrical portion 551A extending in the up-down direction in an upper cylindrical sliding portion 551 of the sliding member 55 to be described later, and a lower end surface of the base end portion 562 comes into contact with an upper end surface of a plate-shaped sliding portion 552 of the sliding member 55 to be described later.

The base end portion 562 extends inward in the radial direction to a position where the base end portion 562 can come into contact with an outer circumferential surface of the cylindrical portion 551A extending in the up-down direction of the upper cylindrical sliding portion 551. A diameter (inner diameter) of an inner end surface in the radial direction of the base end portion 562 is equal to or slightly larger than a diameter (outer diameter) of the outer circumferential surface of the cylindrical portion 551A of the upper cylindrical sliding portion 551 (see FIG. 3).

The base end portion 572 of the second swing arm 57 has a flange shape extending downward, and is formed in a cylindrical shape when viewed from above. Specifically, as illustrated in FIG. 3, a lower end surface of the base end portion 572 extends downward to a position where the lower end surface of the base end portion 572 can come into contact with an upper end surface of a plate-shaped portion 553B extending outward in the radial direction from a lower end of a cylindrical portion 553A extending in the up-down direction in a lower cylindrical sliding portion 553 of the sliding member 55 to be described later, and an upper end surface of the base end portion 572 comes into contact with a lower end surface of the plate-shaped sliding portion 552 of the sliding member 55 to be described later.

The base end portion 572 extends inward in the radial direction to a position where the base end portion 572 can come into contact with an outer circumferential surface of the cylindrical portion 553A extending in the up-down direction of the lower cylindrical sliding portion 553. A diameter (inner diameter) of an inner end surface in the radial direction of the base end portion 572 is equal to or slightly larger than a diameter (outer diameter) of the outer circumferential surface of the cylindrical portion 553A of the lower cylindrical sliding portion 553 (see FIG. 3).

According to the above configuration, the base end portion 562 of the first swing arm 56 and the base end portion 572 of the second swing arm 57 are independent of each other in the up-down direction and are rotatably supported by the swing shaft 53 via the sliding member 55 (bearing) to be described later.

### (Sliding Member 55 (Bearing))

As illustrated in FIG. 3, the sliding member 55 includes the upper cylindrical sliding portion 551, the plate-shaped sliding portion 552, and the lower cylindrical sliding portion 553, which are formed separately. The upper cylindrical sliding portion 551 and the lower cylindrical sliding portion 553 have the same configuration (shape and dimension).

The upper cylindrical sliding portion 551 includes the cylindrical portion 551A extending in the up-down direction and the plate-shaped portion 551B extending outward in the radial direction from the upper end of the cylindrical portion 551A.

The plate-shaped sliding portion 552 has a plate-shaped portion 552A formed in an annular plate shape, and a cylindrical portion 552B extending in the up-down direction on the inner side in the radial direction of the plate-shaped portion 552A.

The lower cylindrical sliding portion 553 includes the cylindrical portion 553A extending in the up-down direction and the plate-shaped portion 553B extending outward in the radial direction from a lower end of the cylindrical portion 553A.

The sliding member 55 is fitted around the trunk portion 531 of the swing shaft 53. Specifically, the upper cylindrical sliding portion 551, the base end portion 562, the plate-shaped sliding portion 552, the base end portion 572, and the lower cylindrical sliding portion 553 are fitted around the trunk portion 531 of the swing shaft 53 in this order, and the upper cylindrical sliding portion 551, the plate-shaped sliding portion 552, and the lower cylindrical sliding portion 553 are fixed in a state of being sandwiched in the up-down direction between the flange portion 532 of the swing shaft 53 and the casing of the second arm 11.

The sliding member 55 functions as a sliding bearing that slides with respect to the first swing arm 56 by the cylindrical portion 551A of the upper cylindrical sliding portion 551 and the cylindrical portion 552B of the plate-shaped sliding portion 552 being in surface contact with an inner circumferential surface of the base end portion 562, the plate-shaped portion 551B of the upper cylindrical sliding portion 551 being in surface contact with the upper end surface of the base end portion 562, and the upper end surface of the plate-shaped portion 552A of the plate-shaped sliding portion 552 being in surface contact with the lower end surface of the base end portion 562 with respect to the first swing arm 56.

Similarly, the sliding member 55 functions as a sliding bearing that slides with respect to the second swing arm 57 by the cylindrical portion 553A of the lower cylindrical sliding portion 553 and the cylindrical portion 552B of the plate-shaped sliding portion 552 being in surface contact with an inner circumferential surface of the base end portion 572, the plate-shaped portion 553B of the lower cylindrical sliding portion 553 being in surface contact with the lower end surface of the base end portion 572, and the lower end surface of the plate-shaped portion 552A of the plate-shaped sliding portion 552 being in surface contact with the upper end surface of the base end portion 572 with respect to the second swing arm 57.

According to the above configuration, the first swing arm 56 and the second swing arm 57 are independent of each other and rotatably supported by the swing shaft 53 via the sliding member 55 (bearing).

The sliding member 55 (bearing) of the present embodiment is formed by injection molding hard thermoplastic resin (for example, polyacetal resin) having a rockwell R scale (in accordance with JIS K7202-2: 2001) of 80 to 130 from a viewpoint of low-friction sliding property, wear resistance, and the like.

### (Restriction Member 6)

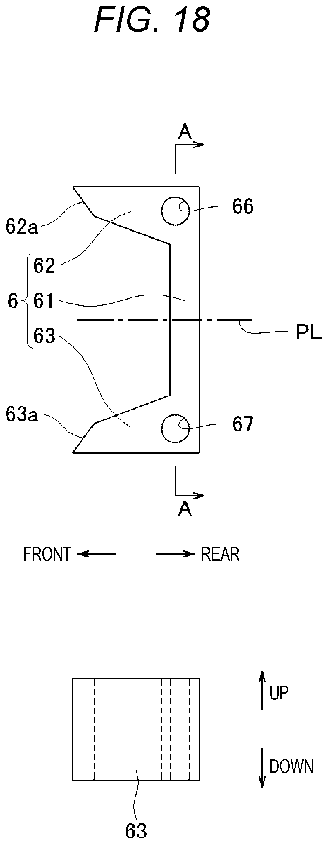

As illustrated in FIG. 2, 3, 18, and 19, the restriction member 6 is a block-shaped metal component that extends in the up-down direction and has a U-shape in a plan view. Specifically, as illustrated in FIG. 2 and FIG. 18, the restriction member 6 is a metal component including a main body portion 61 that extends in a direction perpendicular to the pulley center line PL, a first swing arm restriction portion 62 that extends forward from one end portion of the main body portion 61 and has a contact surface 62a that can come into contact with a side surface 56a of the first swing arm 56, and a second swing arm restriction portion 63 that extends forward from the other end portion of the main body portion 61 and has a contact surface 63a that can come into contact with a side surface 57a of the second swing arm 57, which are integrally formed.

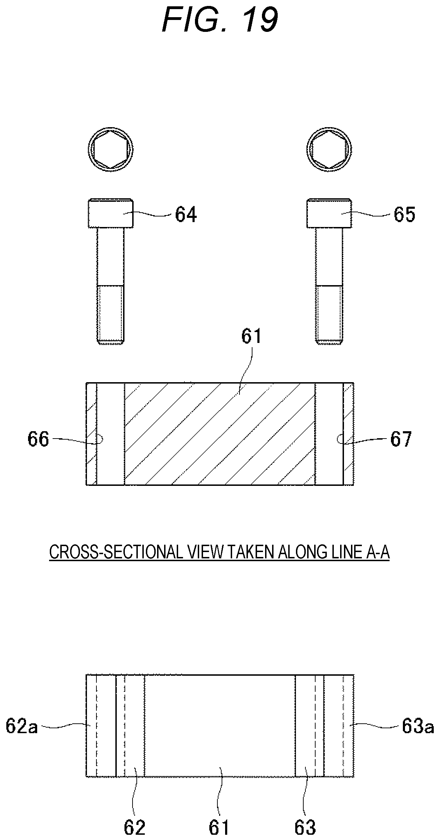

The restriction member 6 is fixed, between the swing shaft 53 and the drive pulley 2, to the casing of the second arm 11 by bolts 64 and 65 (see FIG. 19) inserted through bolt holes 66 and 67 at a position that restricts the first tension roller 51 and the second tension roller 52 from swinging about the swing shaft 53 in the direction opposite to the biasing direction of the spring 54 (see FIG. 2) from the balanced position (state in FIG. 2) where the drive pulley 2 and the driven pulley 3 are stopped (a position where the restriction member 6 can come into contact with the first swing arm 56 and the second swing arm 57).

More specifically, the contact surface 62a of the first swing arm restriction portion 62 has a shape (inclined surface) and a positional relation to be in surface contact with the side surface 56a of the first swing arm 56 at the balanced position where the drive pulley 2 and the driven pulley 3 are stopped. Note that when the first tension roller 51 moves in the biasing direction due to the bias of the spring 54, the surface contact between the contact surface 62a of the first swing arm restriction portion 62 and the side surface 56a of the first swing arm 56 is released.

Similarly, the contact surface 63a of the second swing arm restriction portion 63 has a shape (inclined surface) and is disposed to be in surface contact with the side surface 57a of the second swing arm 57 at the balanced position where the drive pulley 2 and the driven pulley 3 are stopped. Note that when the second tension roller 52 moves in the biasing direction due to the bias of the spring 54, the surface contact between the contact surface 63a of the second swing arm restriction portion 63 and the side surface 57a of the second swing arm 57 is released.

The restriction member 6 is preferably formed with a shape, a dimension, and a material (for example, steel material) that can ensure sufficient rigidity so that the restriction member 6 does not bend when there is a significant increase in tension of the belt (a force exerted by the toothed belt 4) on the tight side of the toothed belt 4.

According to such a restriction member 6, the first tension roller 51 and the second tension roller 52 can swing about the swing shaft 53 only in the biasing direction of the spring 54 (only in a direction where the first tension roller 51 and the second tension roller 52 are toward each other if the spring 54 is a tension spring) from the balanced position where the drive pulley 2 and driven pulley 3 are stopped.

In other words, the first tension roller 51 and the second tension roller 52 cannot swing about the swing shaft 53 in the direction opposite to the biasing direction of the spring 54 (in the direction where the first tension roller 51 and the second tension roller 52 are separated from each other if the spring 54 is a tension spring) from the balanced position where the drive pulley 2 and the driven pulley 3 are stopped.

Note that the restriction member 6 is not limited in the configuration (aspect) as long as the restriction member 6 can restrict the first tension roller 51 and the second tension roller 52 from swinging about the swing shaft 53 in the direction opposite to the biasing direction (see FIG. 2) of the spring 54 from the balanced position (state in FIG. 2) where the drive pulley 2 and the driven pulley 3 are stopped.

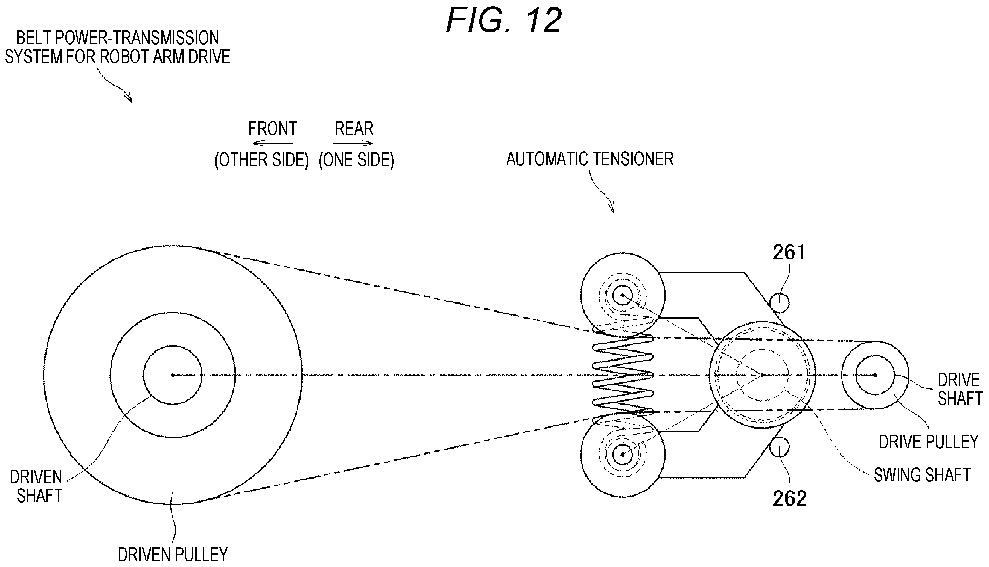

For example, as illustrated in FIG. 12, restriction members 261 and 262 may be formed in a pin shape, and are respectively disposed on positions at both sides sandwiching the pulley center line PL.

In the present embodiment, the restriction member 6 is fixed to the casing of the second arm 11 by the bolts 64 and 65 (see FIG. 19) inserted through the bolt holes 66 and 67, but an aspect may be provided (not illustrated) in which the restriction member 6 is connected to the swing shaft 53 via a connection member (not illustrated) to be fixed to the casing of the second arm 11 via the swing shaft 53.

### (Method for Mounting Restriction Member 6)

### (1) Mounting of Toothed Belt 4

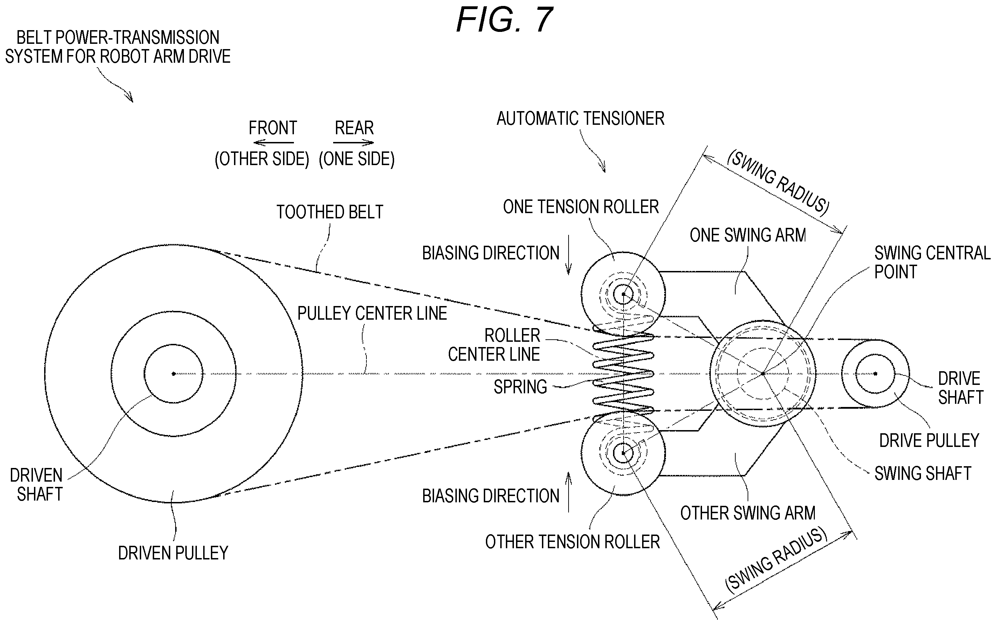

Regarding the belt power-transmission system 1 provided with the automatic tensioner 5 but without the restriction member 6, the toothed belt 4 is wound between the drive pulley 2 and driven pulley 3 (having fixed intershaft distance) at a predetermined belt mounting tension (for example, 5 N/mm width) in an aspect in which the first tension roller 51 and the second tension roller 52 are in contact with the toothed belt 4. That is, a state in which the restriction member 6 has not yet been mounted is set (corresponding to a state in FIG. 7).

In a state in which the drive pulley 2 and the driven pulley 3 are stopped, the first tension roller 51, the second tension roller 52, and the outer circumferential surface of the toothed belt 4 are in contact with each other and balanced with each other in an aspect in which the roller center line RL and the pulley center line PL are orthogonal to each other when viewed in a direction parallel to the drive shaft 21 (hereinafter, viewed from above) (see FIG. 7).

### (Fixing of Restriction Member 6)

In the state in which the drive pulley 2 and driven pulley 3 are stopped as described above, the restriction member 6 is fixed at a predetermined position within the belt power-transmission system 1, thereby completing the belt power-transmission system 1 of the present embodiment.

Here, the predetermined position refers to a position where, under predetermined belt mounting tension (for example, 5 N/mm width), the first tension roller 51, the second tension roller 52, and the outer circumferential surface of the toothed belt 4 are in contact with each other and balanced with each other in the aspect in which the roller center line RL and the pulley center line PL are orthogonal to each other when viewed from above, the contact surface 62a of the first swing arm restriction portion 62 of the restriction member 6 can come into surface contact with the side surface 56a of the first swing arm 56 without a load, and the contact surface 63a of the second swing arm restriction portion 63 of the restriction member 6 can come into surface contact with the side surface 57a of the second swing arm 57 without a load.

Accordingly, even in a state in which the restriction member 6 is mounted on the belt power-transmission system 1 (the state in which the drive pulley 2 and driven pulley 3 are stopped), the state in which the first tension roller 51, the second tension roller 52, and the outer circumferential surface of the toothed belt 4 are in contact with each other and balanced with each other in the aspect in which the roller center line RL and the pulley center line PL are orthogonal to each other when viewed from above is also maintained (see FIG. 2), similar to the state in which the restriction member 6 has not been yet mounted (corresponding to the state in FIG. 7).

### (Operation of Automatic Tensioner 5)

### (1: Before Start)

In the belt power-transmission system for robot arm drive 1, before starting the rotation of the drive pulley 2, that is, in the state in which the drive pulley 2 is stopped, the two tension rollers (the first tension roller 51 and the second tension roller 52) and the outer circumferential surface of the toothed belt 4 are in contact with each other and balanced with each other in the aspect in which the roller center line RL and the pulley center line PL are orthogonal to each other when viewed in the direction parallel to the drive shaft 21 (hereinafter, viewed from above), the contact surface 62a of the first swing arm restriction portion 62 of the restriction member 6 is in surface contact with the side surface 56a of the first swing arm 56 without a load, and the contact surface 63a of the second swing arm restriction portion 63 of the restriction member 6 is in surface contact with the side surface 57a of the second swing arm 57 without a load (see FIG. 2).

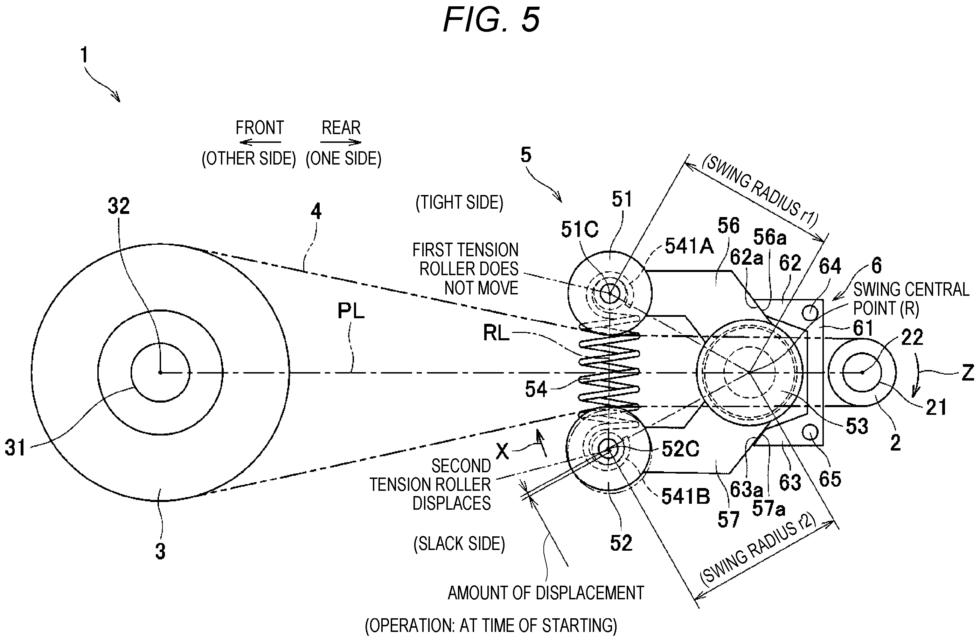

### (2: at Time of Forward and Reverse Switching (at Time of Starting) (When Drive Pulley 2 Rotates in Arrow Z Direction in FIG. 5)

### (2-1: at Tight Side of Toothed Belt 4)

As illustrated in FIG. 5, when the drive pulley 2 starts to rotate in an arrow Z direction, on the tight side of the toothed belt 4, the tension of the toothed belt 4 increases, and the first tension roller 51, which is one of the tension rollers located on the tight side of the toothed belt 4, is pressed by the toothed belt 4 by the tension of the toothed belt 4 to displace in a tight direction of the toothed belt 4.

In this case, the contact surface 62a of the first swing arm restriction portion 62 of the restriction member 6 comes into surface contact with the side surface 56a of the first swing arm 56 on which the first tension roller 51 is supported, and the first tension roller 51 is restricted from displacing in the tight direction of the toothed belt 4. Accordingly, the two tension rollers (the first tension roller 51 and the second tension roller 52), which are connected (biased) by the spring 54, are prevented from swinging about the swing shaft 53 (central axis R).

### (2-2: at Slack Side of Toothed Belt 4)

On the other hand, as illustrated in FIG. 5, when the drive pulley 2 starts to rotate in the arrow Z direction, on the slack side of the toothed belt 4, the tension of the toothed belt 4 decreases, and slack of the toothed belt 4 occurs, but the second tension roller 52, which is the other one of the tension rollers located on the slack side of the toothed belt 4, displaces in an X direction in FIG. 5 by the biasing force of the spring 54 to eliminate slack of the toothed belt 4.

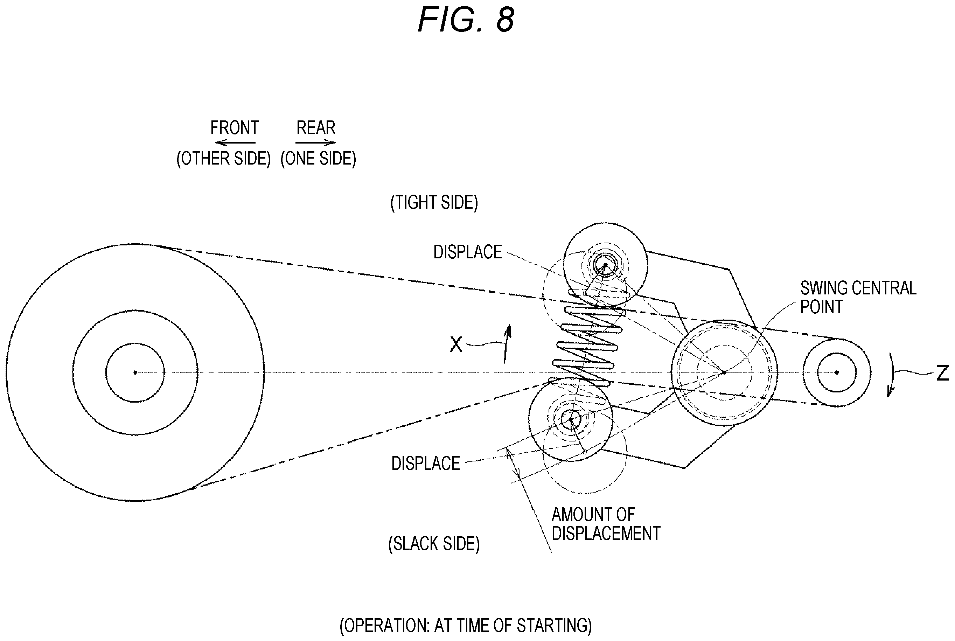

In this case, on the tight side of the toothed belt 4, the contact surface 62a of the first swing arm restriction portion 62 of the restriction member 6 comes into surface contact with the side surface 56a of the first swing arm 56 on which the first tension roller 51 is supported, and the first tension roller 51 is restricted from displacing in the tight direction of the toothed belt 4. Accordingly, since the first tension roller 51 can be prevented from displacing to the tight direction of the toothed belt 4, as compared with a configuration not including the restriction member 6 (FIG. 8), an amount of displacement of the second tension roller 52, which is located on the slack side, from a neutral position to a position where the slack of the toothed belt 4 can be eliminated is minimized. Specifically, in the configuration including the restriction member 6 (FIG. 5), the amount of displacement of the second tension roller 52, which is located on the slack side, is only about 1/10 of that in the configuration not including the restriction member 6 (FIG.8).

Therefore, even if the biasing force of the spring 54 is set relatively weak such that the tension of the toothed belt 4 is kept relatively low, at the slack side of the toothed belt 4, the second tension roller 52, which is located on the slack side of the toothed belt 4, can quickly displace (swing about the swing shaft 53) to the position where the slack of the toothed belt 4 can be eliminated while being biased by the spring 54 in the direction where the slack of the toothed belt 4 (the biasing direction of the spring 54) is eliminated.

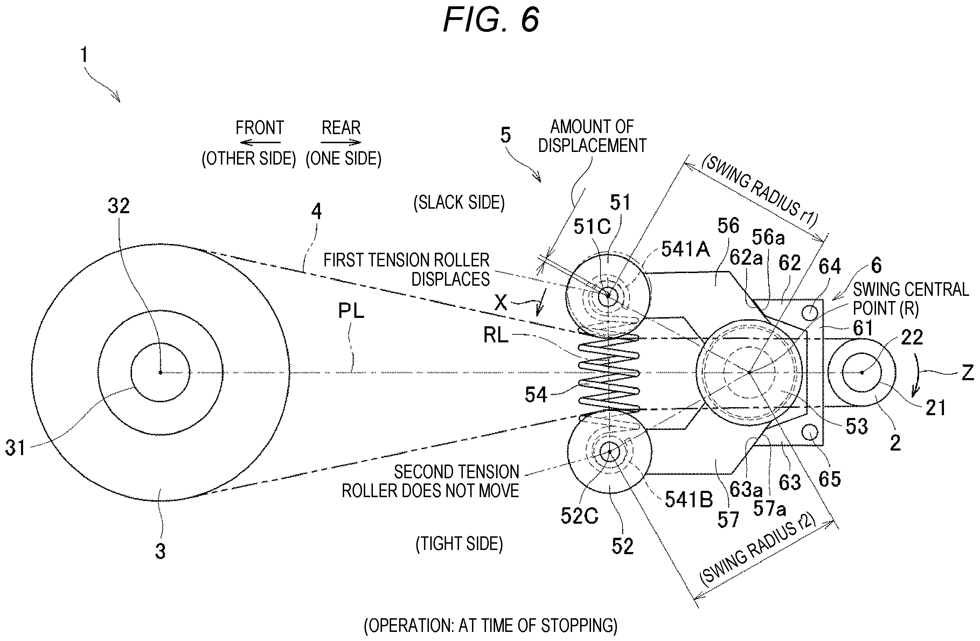

### (3: at Time of Forward and Reverse Switching (at Time of Stopping) (When Drive Pulley 2 Stops During Rotating in Arrow Z Direction in FIG. 6)

### (3-1: at Tight Side of Toothed Belt 4)

As illustrated in FIG. 6, when the drive pulley 2 stops during rotating in the arrow Z direction, on the tight side (lower side in FIG. 6) of the toothed belt 4, the tension of the toothed belt 4 increases, and the second tension roller 52, which is the other one of the tension rollers located on the tight side of the toothed belt 4, is pressed by the toothed belt 4 by the tension of the toothed belt 4 to be displaced in a tight direction of the toothed belt 4.

In this case, the contact surface 63a of the second swing arm restriction portion 63 of the restriction member 6 comes into surface contact with the side surface 57a of the second swing arm 57 on which the second tension roller 52 is supported, and the second tension roller 52 is restricted from displacing in the tight direction of the toothed belt 4. Accordingly, the two tension rollers (the first tension roller 51 and the second tension roller 52), which are connected (biased) by the spring 54, are prevented from swinging about the swing shaft 53 (central axis R).

### (3-2: at Slack Side of Toothed Belt 4)

On the other hand, as illustrated in FIG. 6, when the drive pulley 2 stops during rotating in the arrow Z direction, on the slack side (upper side in FIG. 6) of the toothed belt 4, the tension of the toothed belt 4 decreases, and slack of the toothed belt 4 occurs, but the first tension roller 51, which is one of the tension rollers located on the slack side of the toothed belt 4, displaces in the X direction in FIG. 6 by the biasing force of the spring 54 to eliminate slack of the toothed belt 4.

In this case, on the tight side of the toothed belt 4, the contact surface 63a of the second swing arm restriction portion 63 of the restriction member 6 comes into surface contact with the side surface 57a of the second swing arm 57 on which the second tension roller 52 is supported, and the second tension roller 52 is restricted from displacing in the tight direction of the toothed belt 4. Accordingly, since the second tension roller 52 can be prevented from displacing to the tight direction of the toothed belt 4, as compared with the configuration not including the restriction member 6 (FIG. 9), an amount of displacement of the first tension roller 51, which is located on the slack side, from a neutral position to the position where the slack of the toothed belt 4 can be eliminated is minimized. Specifically, in the configuration including the restriction member 6 (FIG. 6), the amount of displacement of the first tension roller 51, which is located on the slack side, is only about 1/10 of that in the configuration not including the restriction member 6 (FIG.9).

Therefore, even if the biasing force of the spring 54 is set relatively weak to maintain the relatively low tension of the toothed belt 4, at the slack side of the toothed belt 4, the first tension roller 51, which is located on the slack side of the toothed belt 4, can quickly displace (swing about the swing shaft 53) to the position where the slack of the toothed belt 4 can be eliminated while being biased by the spring 54 in the direction where the slack of the toothed belt 4 (the biasing direction of the spring 54) is eliminated.

### (4: Operations of Spring 54 Stretched between First Base Shaft portion 51A and Second Base Shaft Portion 52A)

In the present configuration, the spring 54 is stretched between the first base shaft portion 51A and the second base shaft portion 52A of the two tension rollers (the first tension roller 51 and the second tension roller 52).

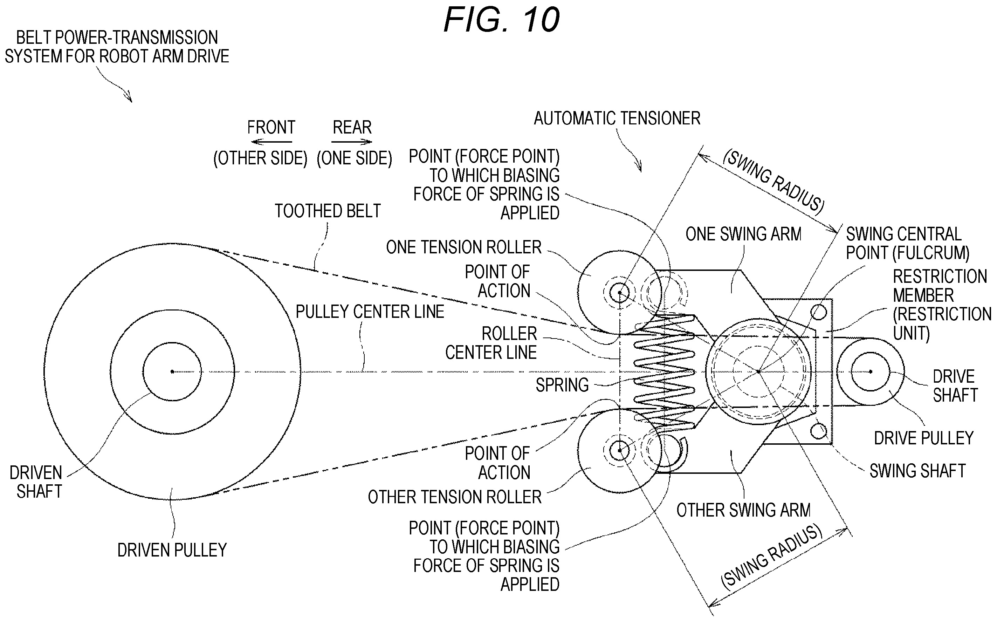

Therefore, even when the two tension rollers (the first tension roller 51 and the second tension roller 52) are configured to swing about the swing shaft 53 (along the plane orthogonal to the swing shaft 53), as compared with a configuration in which the spring 54 is not stretched between the base shaft portions of the two tension rollers [for example, a configuration in which the spring is stretched between members connecting the base shaft portions of the two tension rollers and the swing shaft (between two arm members independent of each other) (FIG. 10: corresponding to FIG. 2 in Patent Literature 1)], when viewed in the direction parallel to the drive shaft 21, a separation distance between the swing central point (the central axis R: a "fulcrum" on the slack side of the toothed belt 4) and a point to which the biasing force of the spring 54 is applied on the slack side of the toothed belt 4 (that is, a "force point" on the slack side of the toothed belt 4) is longer. Therefore, on the slack side of the toothed belt 4, since a larger force acts on a point where the first tension roller 51 or the second tension roller 52 is in contact with the toothed belt 4 on the slack side (that is, a "point of action" on the slack side of the toothed belt 4), the responsiveness (operating speed) of the first tension roller 51 or the second tension roller 52 is further improved on the slack side of the toothed belt 4. Accordingly, it is easier to apply biasing force of the spring 54 with good response in the direction where the slack of the toothed belt 4 is eliminated (the biasing direction of the spring 54), thereby further improving the responsiveness (operating speed) of the two tension rollers (the first tension roller 51 and the second tension roller 52) to the drive pulley 2.

### (Effects)

According to the restriction member 6 having the above configuration (FIG. 2), in the automatic tensioner 5, the two tension rollers (the first tension roller 51 and the second tension roller 52) cannot swing about the swing shaft 53 (central axis R) in the direction opposite to the biasing direction of the spring 54 (in the direction where the first tension roller 51 and the second tension roller 52 are separated from each other if the spring 54 is a tension spring) from the balanced position where the drive pulley 2 and driven pulley 3 are stopped, but can swing only in the biasing direction of the spring 54.

Therefore, in the belt power-transmission system 1 including the automatic tensioner 5 in which the biasing force of the spring 54 is set relatively weak and the two tension rollers (the first tension roller 51 and the second tension roller 52) are configured to swing about the swing shaft 53, and configured to maintain the tension of the toothed belt 4 relatively low (low to an extent that the toothed belt 4 does not slack), even if the load on the driven pulley 3 (further, the moment of inertia of the driven pulley 3) increases (for example, in the belt power-transmission system for robot arm drive 1, if load torque of the driven pulley 3 increases from about 1 N·m to about 3 N·m), the tension of the toothed belt 4 increases on the tight side of the toothed belt 4 immediately after the drive pulley 2 stops at the time of forward and reverse switching (at the time of stopping forward and reverse rotation), and even if the tension of the toothed belt 4 decreases on the slack side of the toothed belt 4 (even if the toothed belt 4 becomes too slack), the tension roller (the second tension roller 52 at the time of stopping forward and reverse rotation) located on the tight side of the toothed belt 4 can be prevented from being pressed by the toothed belt 4 and displacing (swinging about the swing shaft 53) toward the tight side of the toothed belt 4 (FIG. 6).

As a result, each of the two tension rollers (the first tension roller 51 and the second tension roller 52) connected (biased) by the spring 54 can be prevented from swinging about the swing shaft 53 in the direction where the tension roller (the second tension roller 52 at the time of stopping forward and reverse rotation) located on the tight side of the toothed belt 4 displaces toward the tight side of the toothed belt 4, and the tension roller (the second tension roller 52 at the time of stopping forward and reverse rotation) located on the tight side can be prevented from displacing toward the tight side by adding the restriction member 6, and as compared with the configuration not including the restriction member 6 (FIG. 7), an amount of displacement of the tension roller (the first tension roller 51 at the time of stopping forward and reverse rotation) on the slack side from a neutral position to the position where the slack of the toothed belt 4 can be eliminated is minimized, and thus even if the biasing force of the spring 54 is set relatively weak to maintain the relatively low tension of the toothed belt 4, at the slack side of the toothed belt 4, the tension roller (the first tension roller 51 at the time of stopping forward and reverse rotation) located on the slack side of the toothed belt 4 can quickly displace (swing about the swing shaft 53) to the position where the slack of the toothed belt 4 can be eliminated while being biased by the spring 54 in the direction where the slack of the toothed belt 4 is eliminated (biasing direction of the spring 54).

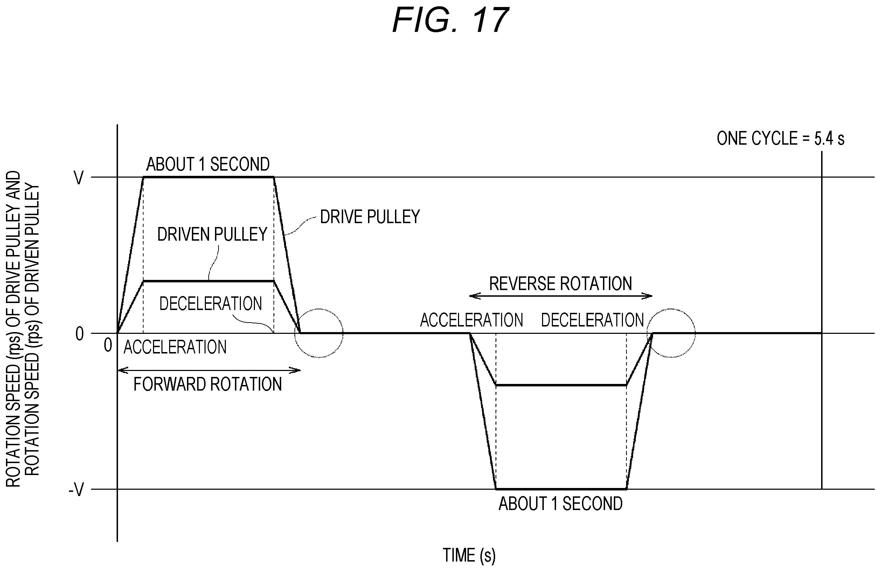

Therefore, according to the present configuration, as illustrated in circled areas in FIG. 17 (a graph showing a time series change of a rotation speed of the drive pulley and a rotation speed of the driven pulley at the time of forward and reverse switching (at the time of starting/stopping forward and reverse rotation)), in the belt power-transmission system 1, even if the load on the driven pulley 3 increases, immediately after the drive pulley 2 stops at the time of forward and reverse switching (at the time of stopping forward and reverse rotation), each of the two tension rollers (the first tension roller 51 and the second tension roller 52) repeats forward and reverse swing in small increments about the swing shaft 53 for a while in an aspect in which the tight side and the slack side of the toothed belt 4 alternate in small increments, and in conjunction with this, the driven pulley 3 can also be prevented from repeating forward and reverse rotation in small increments after overshoot or undershoot.

In other words, according to the present configuration, it is possible to ensure an attenuation property of the driven pulley 3 at the time of forward and reverse switching (at the time of stopping forward and reverse rotation) at a high level [to further ensure responsiveness to a drive at the time of forward and reverse switching at a high level (that is, to sufficiently prevent a rotation angle difference between the drive pulley 2 and driven pulley 3 at the time of forward and reverse switching)]. That is, according to the present configuration, it is possible to ensure a positioning accuracy of the belt power-transmission system 1 repeatedly (ensure synchronous power-transmission) even if the load on the driven pulley 3 increases.

In the above embodiment, the automatic tensioner 5 has two tension rollers (the first tension roller 51 and the second tension roller 52) provided not on the driven pulley 3 side, but on the drive pulley 2 side (note that the automatic tensioner 5 may have the two tension rollers (the first tension roller 51 and the second tension roller 52) provided on a pulley side where the pulley has a smaller diameter out of the drive pulley 2 and the driven pulley 3).

In the belt power-transmission system 1, in order to ensure rotational torque of the driven pulley 3 at a predetermined level, a diameter of the drive pulley 2 is generally smaller than a diameter of the driven pulley 3 (when the belt power-transmission system functions as a so-called speed reduction system), but there are cases where the diameters of the drive pulley 2 and the driven pulley 3 are the same. For example, in the belt power-transmission system in which an interval between the drive pulley 2 and the driven pulley 3 is narrow and a speed reduction ratio (ratio of the pulley diameters) is large, the contact angle of the toothed belt 4 is small in the drive pulley 2 with a small diameter, and if the slack of the toothed belt 4 is large, there is a concern that the tooth jump of the toothed belt 4 is likely to occur, but according to the present configuration, in the drive pulley 2 (including the case where the drive pulley 2 and the driven pulley 3 have the same diameter) or in the pulley with a smaller diameter (regardless of the drive or driven side), it is possible to prevent a decrease in the contact angle of the toothed belt 4, and thus the tooth jump of the toothed belt 4 can be made to be difficult to occur.

When the diameter of the drive pulley 2 of the belt power-transmission system 1 is smaller than the diameter of the driven pulley 3 (that is, when the belt power-transmission system 1 is a speed reduction system), the degree of displacement of the two tension rollers when the two tension rollers swing about the swing shaft 53 at the time of forward and reverse switching is larger than that when the diameter of the drive pulley 2 is the same as the diameter of the driven pulley 3.

Therefore, according to the present configuration, compared with a configuration in which the two tension rollers (the first tension roller 51 and the second tension roller 52) cannot swing about the swing shaft 53 (a configuration in which only the biasing force of the spring acts on the two tension rollers) and the two tension rollers can be displaced only in the direction orthogonal to the pulley center line PL when viewed in the direction parallel to the drive shaft, it is possible to further increase an effect that the first tension roller 51 can be more quickly displaced by swinging about the swing shaft 53 while preventing attenuation by the spring 54 (displacement in the direction for resisting the biasing force of the spring 54) on the tight side of the toothed belt 4. Further, in the belt power-transmission system 1, the responsiveness to the drive at the time of forward and reverse switching (at the time of starting/stopping forward and reverse rotation) can be ensured at a higher level.

In the above belt power-transmission system 1, the second arm 11 of the horizontal articulated robot 10 is driven. Therefore, when the second arm 11 is driven, even if the load on the driven pulley 3 increases, the attenuation property of the driven pulley 3 at the time of forward and reverse switching (at the time of stopping forward and reverse rotation) can be ensured at a high level, a positioning accuracy of the second arm 11 can be repeatedly ensured (that is, magnitude of a difference of the rotation angles between the drive pulley 2 and the driven pulley 3 can be constantly kept within an allowable range), and synchronous power-transmission can be ensured.

### (Another Embodiment)

In the above embodiment, the central axis R (swing central point) of the swing shaft 53 passes through a point on the pulley center line PL and separated toward the drive pulley 2 side from the intersection point of the pulley center line PL and the roller center line RL connecting the rotation center 51C of the first tension roller 51 and the rotation center 52C of the second tension roller 52, and extends in the direction parallel to the drive shaft 21.

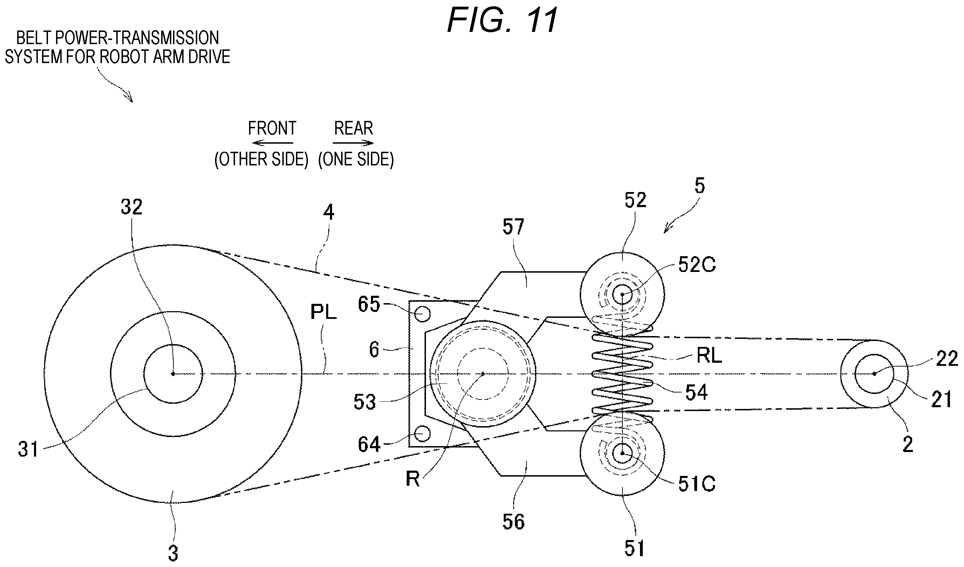

However, as illustrated in FIG. 11, the central axis R (swing central point) of the swing shaft 53 may pass through a point on the pulley center line PL and may be be separated toward the driven pulley 3 from the intersection point of the pulley center line PL and the roller center line RL connecting the rotation center 51C of the first tension roller 51 and the rotation center 52C of the second tension roller 52, and may extend in the direction parallel to the drive shaft 21.

In this case, as illustrated in FIG. 11, the restriction member 6 is fixed, between the swing shaft 53 and the driven pulley 3, to the casing of the second arm 11 by the bolts 64 and 65 (see FIG. 19) inserted through the bolt holes 66 and 67 at the position that restricts the first tension roller 51 and the second tension roller 52 from swinging about the swing shaft 53 in the direction opposite to the biasing direction of the spring 54 from the balanced position where the drive pulley 2 and the driven pulley 3 are stopped (a position where the restriction member 6 can come into contact with the first swing arm 56 and the second swing arm 57).

According to the above configuration, the drive pulley 2, the two tension rollers (the first tension roller 51 and the second tension roller 52), the swing shaft 53, the restriction member 6, and the driven pulley 3 can be arranged in this order from rear to front. In this case, it is easier to set the tension of the toothed belt 4 to be lower than that in a case where the drive pulley 2, the restriction member 6, the swing shaft 53, the two tension rollers (the first tension roller 51 and the second tension roller 52), and the driven pulley 3 are arranged in this order, so that it is possible to easily ensure ease of installation of the toothed belt 4, a synchronous power-transmission property of the toothed belt 4, and tooth jump resistance of the toothed belt 4.

The central axis R (swing central point) of the swing shaft 53 may pass through a point on the extension line of the pulley center line PL and separated toward the drive pulley 2 side from the intersection point of the pulley center line PL and the roller center line RL connecting the rotation center 51C of the first tension roller 51 and the rotation center 52C of the second tension roller 52.

Specifically, the drive shaft 21 may be disposed between the two tension rollers (the first tension roller 51 and the second tension roller 52) of the automatic tensioner 5 and the swing shaft 53.

The central axis R (swing central point) of the swing shaft 53 may be a point on the pulley center line PL and separated toward the drive pulley 2 side from the intersection point of the pulley center line PL and the roller center line RL connecting the rotation center 51C of the first tension roller 51 and the rotation center 52C of the second tension roller 52, and may pass through the central axis of the drive shaft 21 (rotation center 22 of the drive pulley 2) and extend in the direction parallel to the drive shaft 21 (that is, the drive shaft 21 may also serve as the swing shaft 53). In this case, the first swing arm 56 and the second swing arm 57 are rotatably supported by the existing drive shaft 21 via the sliding member 55 (bearing), and it is possible to simplify the belt power-transmission system 1 (reduce the number of components and improve ease of assembly).

In the above embodiment, the belt power-transmission system according to the present invention is described as a belt power-transmission system for robot arm drive that drives a robot arm, but the present invention is not limited thereto. For example, the belt power-transmission system according to the present invention can be applied to a belt power-transmission system of an injection molding machine (a belt power-transmission system portion electrically driven by motors independent of each other in respective operation portions such as injection, metering, and mold opening and closing portions), a general industrial machine or device, or the like.

### Example

In the belt power-transmission system of the present invention, even if the load on the driven pulley increases, it is necessary to ensure the attenuation property of the driven pulley at the time of forward and reverse switching (at the time of stopping forward and reverse rotation) at a high level [to further ensure the responsiveness to the drive at the time of forward and reverse switching (at the time of starting/stopping forward and reverse rotation) at a high level, that is, the rotation angle difference between the drive pulley and the driven pulley at the time of forward and reverse switching is constantly kept within an allowable range], it is necessary to ensure the positioning accuracy repeatedly, and it is necessary to ensure synchronous power-transmission [to ensure that the tension of the belt is maintained automatically and appropriately (to the extent that the belt does not slack) (including adjustment of the tension drop occurring at the initial stage of running)].

Therefore, in the present Example, belt power-transmission systems (hereinafter, referred to as respective test pieces) according to Examples 1 to 4 and Comparative Examples 1 to 4 were produced, an attenuation property test [evaluation of the attenuation property of the driven pulley at the time of forward and reverse switching (at the time of stopping forward and reverse rotation)] and a responsiveness test [evaluation of the responsiveness to the drive at the time of forward and reverse switching (at the time of starting/stopping forward and reverse rotation)] were performed, and comparative verification was performed.

The present invention will be described in more detail below based on Examples, but the present invention is not limited to these Examples.

### [Belt Power-Transmission System]

### (Common Among Respective Test Pieces)

### (Toothed Belt: FIG. 13)

·Shape of tooth portion: the tooth shape was an H-tooth shape belonging to a straight tooth (a shape having a substantially semicircular cross-section).
·Number of teeth: 200
·Tooth pitch: 3 mm
·Belt length: 600 mm
·Belt width: 10 mm

### [Use Material]

### (Tension Member)

·Configuration: Twisted cords of A1 to A3 each having a configuration shown in Table 2 were produced as tension members used for respective toothed belts of the respective test pieces.

·The tension member (twisted cord) of A1 was produced by the following procedure.

Filaments (9-micron diameter) of a glass fiber (E glass fiber) called ECG-150 described in JIS R3413 (2012) were bundled and aligned to form three strands. The three strands were immersed in an RFL solution (18°C to 23°C) having a composition shown in Table 3 by passing through for 3 seconds, and then heated and dried at 200°C to 280°C for 3 minutes to uniformly form an adhesion layer on the surface. After the adhesion treatment, the three strands were primarily twisted at a number of twist of 12 times/10 cm without secondary twisting to prepare a twisted cord having a diameter of about 0.35 mm with single twist.

The tension member (twisted cord) of A2 was prepared in the same manner as in A1 except that the glass fiber was changed to KCG150.

The tension member (twisted cord) of A3 was prepared by the same procedure as that of the cords of A1 and A2 except that the used strand was one strand obtained by bundling and aligning carbon fiber filaments (3K). The tension member was made as the twisted cord of 0.53 mm in diameter with single twist.

**Table 2**

| | A1 | A2 | A3 |
|---|---|---|---|
| Material | E glass fiber | K glass fiber | Carbon fiber |
| Filament diameter (µm) | 9 | 9 | 7 |
| Name of filament | ECG150 | KCG150 | 3K |
| Configuration | 3/0 | 3/0 | 1/0 |
| Number of twist (times/10cm) | 12 | 12 | 12 |
| Twisting method | Single twist | Single twist | Single twist |
| Tension member diameter (mm) | 0.35 | 0.35 | 0.53 |
| Elastic modulus (MPa) | 35.5 | 41.5 | 51.9 |

### (Elastic Modulus of Tension Member)

Here, a method of measuring an elastic modulus (tensile elastic modulus) of the tension member (in the longitudinal direction) shown in Table 2 will be described.

A chuck (grasping tool) is mounted to a lower fixing portion and an upper load cell connection portion of an autograph ("AGS-J10kN" manufactured by Shimadzu Corporation), and both ends of the tension member are grasped by the chuck.

Next, in a stress-strain curve measured when the tension member was pulled at a speed of 250 mm/min until the tension member was cut, an inclination of a straight line in a region (100 N to 200 N) having a comparatively linear relationship was calculated as the tensile elastic modulus of the tension member.

### (Tooth Fabric)

·A configuration of the fiber fabric used for tooth fabric of the respective test pieces was one type as follows.

A composition has 66 nylon as a weft yarn and 66 nylon as a warp yarn. In a yarn configuration, the weft yarn is a woolly processed yarn having 44 dtex and the warp yarn has 44 dtex. A weaving configuration is twill weaving. Then, the tooth fabric having the above configuration was subjected to an RFL treatment with the RFL treatment liquid shown in Table 3. Thereafter, an adhesion treatment was performed with a rubber cement in which the same rubber composition as that of the unvulcanized rubber sheet shown in Table 4 was dissolved in toluene, and the rubber composition sheets having the compositions shown in Table 4 were laminated and subjected to a coating treatment.

**Table 3**

| | Part by mass |
|---|---|
| Resorcin | 1.35 |
| Formalin (solid content concentration: 37%) | 1 |
| Vinyl pyridine latex (solid content concentration: 40%) | 130 |
| Water | 50 |

### (Rubber Composition)

·A rubber composition having the composition shown in Table 4 [rubber component: chloroprene rubber (CR)] was mixed and kneaded in a Banbury mixer, and the kneaded rubber passed through a calendar roll to form a rolled rubber sheet having a predetermined thickness, and an unvulcanized rubber sheet for forming a back portion and a tooth portion constituting each of the toothed belts of the respective test pieces was produced.
·Hardness of the vulcanized rubber sheet obtained by press-vulcanizing the prepared rubber composition (unvulcanized rubber sheet) at 165°C for 30 minutes was measured using a type A durometer at an atmospheric temperature of 23°C (23 ± 2°C) in accordance with JIS K6253 (2012), and was about 81.

In Table 4, the components indicated by 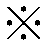 are as follows.

**Table 4**

| (Part by mass) | | |
|---|---|---|
| | | Blending amount |
| Composition of rubber composition | Chloroprene rubber (CR) 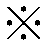 1 | 100 |
| | Adipic acid plasticizer | 8.75 |
| | Magnesium oxide | 4 |
| | Antioxidant 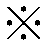 2 | 2 |
| | Vulcanization accelerator 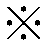 3 | 1.5 |
| | Carbon black 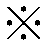 4 | 70 |
| | Inorganic filler | 35 |
| | Zinc oxide 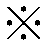 5 | 5 |
| | Sulfur | 0.5 |
| | Total | 226.75 |
| Rubber hardness (JIS A°) | | 81 |

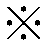 1 "PM-40" manufactured by Denka Co., Ltd.
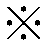 2 "Nocrac MB" manufactured by Ouchi Shinko Chemical Industrial Co., Ltd.
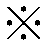 3 "N-cyclohexyl-2 benzothiazole sulfenamide" manufactured by Ouchi Shinko Chemical Industrial Co., Ltd.
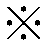 4 "Seast 3" manufactured by Tokai Carbon Co., Ltd.
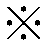 5 "Zinc Oxide Type 3" manufactured by Seido Chemical Industry Co., Ltd.

### [Production of Toothed Belt]

The respective toothed belts of the respective test pieces were produced by a normal press-fitting method described in the above embodiment using the tension members (adhesion-treated products), the tooth fabric (adhesion-treated products), and the rubber compositions (unvulcanized rubber sheets) described in the above used material. The vulcanization was performed at 161°C for 25 minutes. In order to form the back portion in a predetermined thickness, a back surface of the belt sleeve obtained by the vulcanization was polished to the predetermined thickness and then cut to a predetermined width to obtain the respective toothed belts of the respective test pieces.

Since the toothed belt was produced by the normal press-fitting method, the back portion and the tooth portion were constituted by rubber compositions having the same composition. Therefore, in the respective toothed belts, the hardness of the rubber compositions constituting the back portion and the hardness of the rubber composition constituting the tooth portion are substantially the same.

### (Pulley Layout)

·Each of the belt power-transmission systems of Examples 1 to 4 (Examples 1 and 3 to 4 are illustrated in FIG. 2, and Example 2 is illustrated in FIG. 10) and Comparative Examples 1 to 4 (Comparative Examples 2 to 4 are not illustrated, and Comparative Example 1 is illustrated in FIG. 7) had a two-axis layout in which the drive pulley and the driven pulley were toothed pulleys with straight teeth and both axes were fixed, and included an axial load detector (load cell) connectable to a rotation shaft of one side (drive pulley).
·Number of teeth of drive pulley/pulley diameter (assuming tension member line): 21 teeth/20.054 mm
·Number of teeth of driven pulley/pulley diameter (assuming tension member line): 84 teeth/80.214 mm
·Speed reduction ratio: 4 (pitch diameter of driven pulley is four times larger than that of drive pulley)
·Belt mounting tension: required level of belt mounting tension was about 5 N/mm width (5 N per 1 mm width of belt).

In the present specification, tension of the belt which is measured in a stationary state immediately before actual running [after idling (breaking-in driving)] is treated as the "belt mounting tension".

The belt mounting tension was calculated from an axial load detected by the axial load detector (load cell) connected to the rotation shaft on one side (drive pulley).
·Intershaft distance was 220 mm (reference value).

### (Automatic Tensioner and Restriction Unit (Restriction Member))

### (Examples 1 and 3 to 4)

·The automatic tensioner and the restriction unit (restriction member) described in the above embodiment (see FIG. 3 and FIG. 4) were applied to the belt power-transmission system in the aspect illustrated in FIG. 2. That is, the automatic tensioners and the restriction units of Examples 1 and 3 to 4 have the same configurations, each of the automatic tensioners is configured such that the biasing action of the spring (tension spring) stretched between the base shaft portions of the two tension rollers and a swing action about the swing shaft act together on the two tension rollers, and each of the restriction units has an aspect of being provided to be capable of coming into contact with the first swing arm and the second swing arm (and is fixed (bolted) on a table of an evaluation tester to be described later) after the toothed belt is installed between the pulleys. Note that the restriction unit was made of an aluminum alloy casting (ADC12) and was a metal component formed in a shape of a single block in a plan view.

### (Example 2)

·As illustrated in FIG. 10, the automatic tensioner and the restriction unit, which had the same configurations as those in Examples 1 and 3 to 4 (see FIG. 2), were produced and applied to the belt power-transmission system except that the spring (tension spring) was stretched between the two arm members (between one swing arm and the other swing arm).

### (Comparative Example 1)

·As illustrated in FIG. 7, that the belt power-transmission system did not include the restriction unit, only the automatic tensioner having the same configuration as that in Examples 1 and 3 to 4 (see FIG. 2) was produced and applied to the belt power-transmission system.

### (Comparative Example 2)

·The belt power-transmission system did not include the restriction unit, and an automatic tensioner (not illustrated) configured such that only the biasing action of the spring (tension spring) acted on the two tension rollers and the swing action about the swing shaft did not act was produced based on the automatic tensioner of Example 1 (see FIG. 2) and applied to the belt power-transmission system.

### (Comparative Example 3)

·The belt power-transmission system did not include the automatic tensioner and the restriction unit (that is, the belt power-transmission system included only the drive pulley, the driven pulley, and the toothed belt) (not illustrated).

### (Comparative Example 4)

·The belt power-transmission system did not include the restriction unit, and an automatic tensioner (not illustrated) configured such that the biasing action of the spring (tension spring) did not act on the two tension rollers and only the swing action about the swing shaft acted was produced based on the automatic tensioner of Example 1 (see FIG. 2), and applied to the belt power-transmission system.

### [Evaluation of Belt Power-Transmission System: Item, Method, Standard]

With respect to the respective test pieces (Examples 1 to 4, Comparative Examples 1 to 4), in order to determine whether the belt power-transmission system capable of solving the problem of the present application was obtained, a necessity of aging [whether automatic adjustment (correction) of a tension drop at the initial stage of belt running is possible], an attenuation property (an attenuation property of the driven pulley at the time of stopping forward and reverse rotation), and responsiveness (responsiveness to the drive at the time of forward and reverse switching) were verified.

### [Necessity of Aging]

### (Method, Determination Criteria)

If predetermined belt mounting tension (about 5 N/mm width) could be ensured without performing aging [retensioning the belt (tension adjustment operation) by adjusting the intershaft distance or the like after the idling (breaking-in driving)], it was evaluated that the tension drop at the initial stage of the belt running can be automatically adjusted (corrected), and the determination was made as "a".

In order to ensure the predetermined belt mounting tension (about 5 N/mm width), if the aging [retensioning the belt (tension adjustment operation) by adjusting the intershaft distance or the like after the idling (breaking-in driving)] was necessary, it was evaluated that the tension drop at the initial stage of the belt running could not be automatically adjusted (corrected), and the determination was made as "b", and the following test (responsiveness test) was not performed.

From the viewpoint of suitability (necessity of aging) for actual use in the present application, the belt power-transmission system determined as "a" was regarded as an acceptable-level.

### [Attenuation Property and Responsiveness]

### (Test Name)

### Attenuation Property and Responsiveness Test

### (Tester)

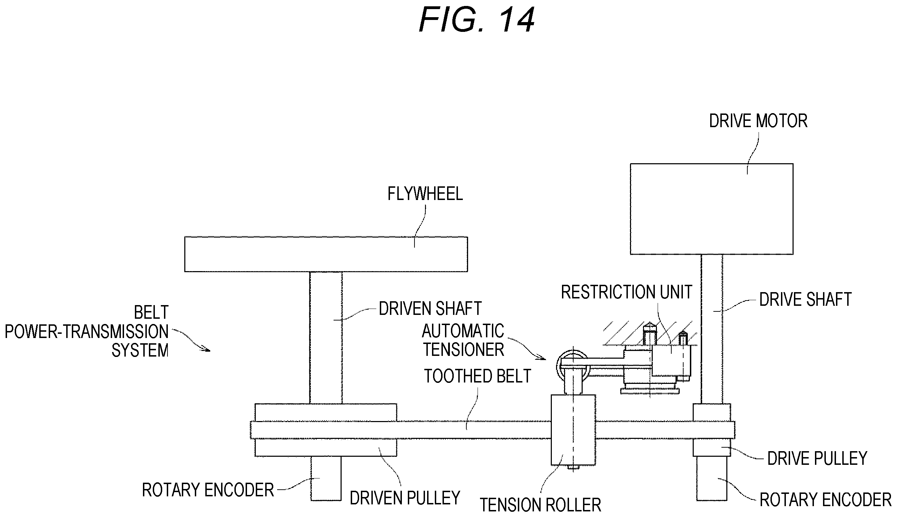

A responsiveness evaluation tester was used for the test (see FIG. 14).

The responsiveness evaluation tester is configured to cause the toothed belt wound between two pulleys to run in a test pattern (cycle pattern) involving frequent forward and reverse rotation, and detect a time-series change in the number of rotation of pulleys during running and a time-series change in rotation angle difference (a rotation angle of the drive shaft - a rotation angle of the driven shaft) during running by rotation pulse signals output from a pair of rotary encoders (rotation angle detectors) mounted to respective shafts.

A pulley layout is the same as that of the above belt power-transmission system (FIG. 2). That is, the layout of the pulleys of the responsiveness evaluation tester had a drive pulley and a driven pulley, and an intershaft distance was fixed at 220 mm.

In addition, assuming the present application (for robot arm drive), a flywheel was mounted to a driven side so as to be capable of applying a predetermined load torque.

Assuming the present application (for robot arm drive), in order to be able to detect the rotation angle of the drive pulley and the rotation angle of the driven pulley with high accuracy, the pair of rotary encoders used an encoder having an excellent resolution capability of the rotation angles [encoder having an angular resolution capability of 0.0044° (R-1L manufactured by CANON)].

### (Test Method)

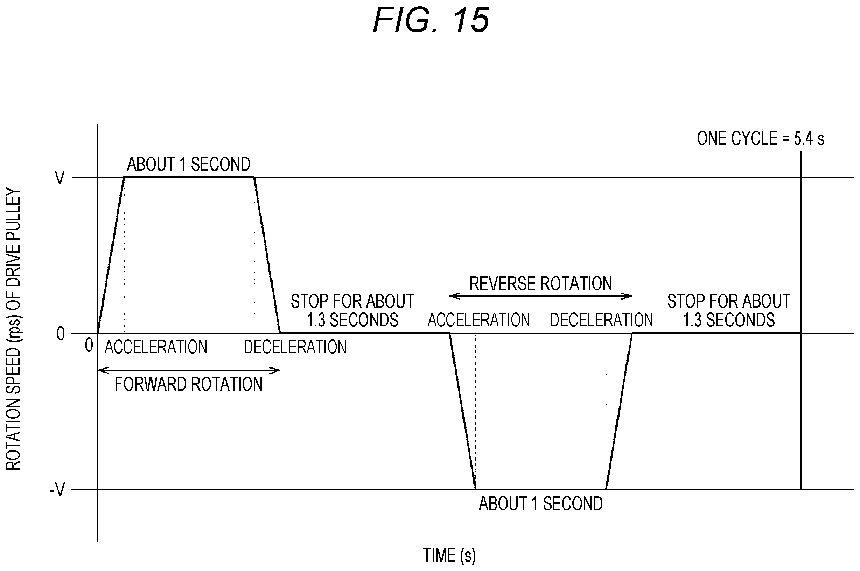

The toothed belt wound between the pulleys (having fixed intershaft distance) at predetermined belt mounting tension (about 5 N/mm width) at room temperature ran to repeat the frequent forward and reverse rotation for 250 cycles under test conditions (only the rotation speed of the drive pulley was variable) shown in Table 5 and a test pattern (cycle pattern) illustrated in FIG. 15. From the graph (not illustrated) of the obtained time series change in the rotation speed of the pulleys (drive pulley and driven pulley) and the graph (not illustrated) of the obtained time series change in the rotation angle difference, whether the rotation of the driven pulley was inversed at the time of stopping forward and reverse rotation and the level of the rotation angle difference (maximum absolute value) were read as test results for each varied load torque of the driven pulley (0.8 N·m, 3 N·m) and each varied rotation speed of the drive pulley (2 rps, 5 rps).

Since the rotation angle difference causes overshoot and undershoot at the time of forward and reverse switching [at the time of starting (acceleration of)/stopping (deceleration of) forward and reverse rotation] in time series, the absolute value thereof becomes maximum at the time of forward and reverse switching (frequency: 4 times per cycle). Tables 6 and 7 show the acceleration or deceleration speeds at the time of forward and reverse switching corresponding to each rotation speed of the drive pulley.

**Table 5**

| | |
|---|---|
| Belt mounting tension | 50 N (5 N/mm width) |
| Number of teeth of drive pulley | 21 teeth |
| Number of teeth of driven pulley | 84 teeth |
| Rotation speed V (variable) of drive shaft | 2 rps and 5 rps (forward and reverse) |
| Acceleration and deceleration time | About 0.2 seconds |
| Load torque (variable) | 0.8 N·m and 3 N·m |
| Cycle pattern | See FIG. 15 |
| Number of cycles | 250 cycles |

### (Determination Criteria [Attenuation Property])

In the determination of the attenuation property (attenuation property of the driven pulley at the time of stopping forward and reverse rotation), whether the rotation of the driven pulley was inversed (to perform reverse rotation from forward rotation or to perform forward rotation from reverse rotation) at the time of stopping forward and reverse rotation was used as an index (the attenuation property could be ensured at a high level if the rotation was not inversed, and the responsiveness to the drive at the time of forward and reverse switching could be further ensured at a high level), and
at the time of forward and reverse switching (at the time of stopping forward and reverse rotation),
a case where the inversion of the driven pulley was not observed by any means for each load torque of the driven pulley and each acceleration or deceleration speed of the drive pulley (that is, if the overshoot or undershoot of the driven pulley only occurred at the time of forward and reverse switching) was determined as "a", and
a case where the inversion of the driven pulley was observed at least once for each load torque of the driven pulley and each acceleration or deceleration speed of the drive pulley was determined as "b".

From the viewpoint of suitability (attenuation property) for actual use in the present application, the belt power-transmission system determined as "a" was regarded as an acceptable-level.

### (Determination Criteria [Responsiveness])

In the determination of the responsiveness (responsiveness to the drive at the time of forward and reverse switching), the rotation angle difference between the drive pulley and the driven pulley at the time of forward and reverse switching was used as an index (the smaller the absolute value was, the higher the responsiveness was, the positioning accuracy could be repeatedly ensured, and synchronous power-transmission could be ensured),
at the time of forward and reverse switching (at the time of starting/stopping forward and reverse rotation),
a case where the rotation angle difference (absolute value) for each load torque of the driven pulley and each acceleration or deceleration speed of the drive pulley was always within 0.1° was determined as "a",
a case where the rotation angle difference (absolute value) for each load torque of the driven pulley and each acceleration or deceleration speed of the drive pulley exceeded 0.1° even once but was always within 0.2° was determined as "b", and
a case where the rotation angle difference (absolute value) for each load torque of the driven pulley and each acceleration or deceleration speed of the drive pulley exceeded 0.2° even once was determined as "c".

From the viewpoint of suitability (responsiveness) for actual use in the present application, the belt power-transmission system determined as "a" and "b" was regarded as an acceptable-level.

### [Comprehensive Determination]

Criteria of comprehensive determination (ranking) of a belt power-transmission system that can solve this problem are as follows based on the results of the determination in the above three test items (necessity of aging, attenuation property, and responsiveness).

Rank A: The case where all of the above evaluation items were determined as "a" was judged that there was no problem in practical use, and was rated as the best rank.

Rank B: The case where the evaluation items of the necessity of aging and the attenuation property were both determined as "a" and the evaluation item of the responsiveness was determined as "b" was judged that there was no problem in practical use but was rated as somewhat inferior rank.

Rank C: The case where even one of the evaluation items of necessity of aging and the attenuation property was determined as "b", and/or the case where the evaluation item of the responsiveness was determined as "c" was rated as an "insufficient" rank as a solution to the present problem (failed).

### [Verification Results]

Verification results are shown in Tables 6 to 7.

### (Comparison in which Configuration of Automatic Tensioner and Whether Restriction Unit was Mounted were Changed)

**Table 6**

| | | | Example | | | | Example | | | | Comparative Example | | | |
|---|---|---|---|---|---|---|---|---|---|---|---|---|---|---|
| | | | 1 | | | | 2 | | | | 1 | | | |
| Toothed belt | Tension member type (material of filament) | | A1 | | | | | | | | | | | |
| Automatic tensioner | Whether mounting | | Yes | | | | | | | | | | | |
| | Biasing action of spring | | Present | | | | | | | | | | | |
| | Swing action about swing shaft | | Present | | | | | | | | | | | |
| | Stretched position of spring | | Between base shaft portions of two tension rollers | | | | Between two arm members | | | | Between base shaft portions of two tension rollers | | | |
| Restriction unit | Whether mounting | | Yes | | | | | | | | No | | | |
| Evaluation of belt power-transmission system | Necessity of aging | Necessary or not | Unnecessary | | | | Unnecessary | | | | Unnecessary | | | |
| | | Determination | a | | | | a | | | | a | | | |
| | Load torque (N·m) of driven pulley | | 0.8 | | 3 | | 0.8 | | 3 | | 0.8 | | 3 | |
| | Rotation speed V (rps) of drive shaft | | 2 | 5 | 2 | 5 | 2 | 5 | 2 | 5 | 2 | 5 | 2 | 5 |
| | Acceleration or deceleration speeds (rotation/s²) of drive pulley at the time of forward and reverse switching | | 10 | 25 | 10 | 25 | 10 | 25 | 10 | 25 | 10 | 25 | 10 | 25 |
| | Attenuation property | Whether rotation of driven pulley at the time of stopping forward and reverse rotation is inversed | No | No | No | No | No | No | No | No | No | No | Yes | Yes |
| | | Determination | a | | | | a | | | | b | | | |
| | Responsiveness | Rotation angle difference (°) (maximum value of absolute value) | 0.05 | 0.08 | 0.06 | 0.10 | 0.12 | 0.17 | 0.15 | 0.20 | 0.09 | 0.15 | 0.24 | 0.40 |
| | | Determination | a | | | | b | | | | c | | | |
| Comprehensive determination (rank) | | | A | | | | B | | | | C | | | |

| | | | Comparative Example | | | | Example | | | | ComparativeComparative Example | | | |
|---|---|---|---|---|---|---|---|---|---|---|---|---|---|---|
| | | | 2 | | | | 3 | | | | 4 | | | |
| Toothed belt | Tension member type (material of filament) | | A1 | | | | | | | | | | | |
| Automatic tensioner | Whether mounting | | Yes | | | | No | | | | Yes | | | |
| | Biasing action of spring | | Present | | | | - | | | | Absent | | | |
| | Swing action about swing shaft | | Absent | | | | - | | | | Present | | | |
| | Stretched position of spring | | Between base shaft portions of two tension rollers | | | | - | | | | - | | | |
| Restriction unit | Whether mounting | | No | | | | | | | | | | | |
| Evaluation of belt power-transmission system | Necessity of aging | Necessary or not | Unnecessary | | | | Necessary | | | | Necessary | | | |
| | | Determination | a | | | | b | | | | b | | | |
| | Load torque (N·m) of driven pulley | | 0.8 | | 3 | | - | | | | - | | | |
| | Rotation speed V (rps) of drive shaft | | 2 | 5 | 2 | 5 | - | | | | - | | | |
| | Acceleration or deceleration speeds (rotation/s²) of drive pulley at the time of forward and reverse switching | | 10 | 25 | 10 | 25 | - | | | | - | | | |
| | Attenuation property | Whether rotation of driven pulley at the time of stopping forward and reverse rotation is inversed | Yes | Yes | Yes | Yes | - | | | | - | | | |
| | | Determination | b | | | | - | | | | - | | | |
| | Responsiveness | Rotation angle difference (°) (maximum value of absolute value) | 0.37 | 0.45 | 0.89 | 1.10 | - | | | | - | | | |
| | | Determination | c | | | | - | | | | - | | | |
| Comprehensive determination (rank) | | | C | | | | C | | | | C | | | |

### (Examples 1 to 2 and Comparative Examples 1 to 4)

The configuration of the automatic tensioner (including whether the automatic tensioner was mounted) and whether the restriction unit was mounted was changed and compared based on the belt power-transmission system of Example 1 (including the restriction unit and the automatic tensioner configured such that the biasing action of the spring stretched between the base shaft portions of the two tension rollers and the swing action about the swing shaft acted together on the two tension rollers).

In the case (Examples 1 to 2 and Comparative Examples 1 to 2) where the belt power-transmission system included the automatic tensioner in which the biasing action of the spring acted on the two tension rollers, the aging was unnecessary (determined as "a"), in Examples 1 to 2 in which not only the biasing action of the spring but also the swing action about the swing shaft acted on the two tension rollers and the restriction unit was mounted, the attenuation property was also determined as "a", but in Comparative Example 1 in which not only the biasing action of the spring but also the swing action about the swing shaft acted on the two tension rollers and the restriction unit was not mounted, as the load on the driven pulley increased (from 0.8 N·m to 3 N·m), the attenuation property deteriorated, and the attenuation property was determined as "b" (failure level), and as a result, the responsiveness was determined as "c" (also C rank in the comprehensive determination).

In Examples 1 to 2, regarding Example 1 in which the spring was stretched between the base shaft portions of the two tension rollers, the responsiveness was also determined as "a" (also A rank in the comprehensive determination), and regarding Example 2 in which the spring was not stretched between the base shaft portions of the two tension rollers but was stretched between the two arm members, the responsiveness was the acceptable-level but was determined as "b" (also B rank in the comprehensive determination), which was slightly inferior to Example 1 (determined as "a").

On the other hand, in Comparative Example 3 in which the belt power-transmission system did not have the automatic tensioner, and in Comparative Example 4 in which the belt power-transmission system had the automatic tensioner in which the biasing action of the spring did not act on the two tension rollers and only the swing action about the swing shaft acted on the two tension rollers, the aging was necessary (determined as "b"), and the comprehensive determination was rank C.

### (Comparison in which Tension Member Types of Toothed Belts were Changed)

**Table 7**

| | | | Example | | | | Example | | | | Example | | | |
|---|---|---|---|---|---|---|---|---|---|---|---|---|---|---|
| | | | 1 | | | | 3 | | | | 4 | | | |
| Toothed belt | Tension member type (material of filament) | | A1 | | | | A2 | | | | A3 | | | |
| Automatic tensioner | Whether mounting | | Yes | | | | | | | | | | | |
| | Biasing action of spring | | Present | | | | | | | | | | | |
| | Swing action about swing shaft | | Present | | | | | | | | | | | |
| | Stretched position of spring | | Between base shaft portions of two tension rollers | | | | | | | | | | | |
| Restriction unit | Whether mounting | | Yes | | | | | | | | | | | |
| Evaluation of belt power-transmission system | Necessity of aging | Necessary or not | Unnecessary | | | | Unnecessary | | | | Unnecessary | | | |
| | | Determination | a | | | | a | | | | a | | | |
| | Load torque (N·m) of driven pulley | | 0.8 | | 3 | | 0.8 | | 3 | | 0.8 | | 3 | |
| | Rotation speed V (rps) of drive shaft | | 2 | 5 | 2 | 5 | 2 | 5 | 2 | 5 | 2 | 5 | 2 | 5 |
| | Acceleration or deceleration speeds (rotation/s²) of drive pulley at the time of forward and reverse switching | | 10 | 25 | 10 | 25 | 10 | 25 | 10 | 25 | 10 | 25 | 10 | 25 |
| | Attenuation property | Whether rotation of driven pulley at the time of stopping forward and reverse rotation is inversed | No | No | No | No | No | No | No | No | No | No | No | No |
| | | Determination | a | | | | a | | | | a | | | |
| | Responsiveness | Rotation angle difference (°) (maximum value of absolute value) | 0.05 | 0.08 | 0.06 | 0.10 | 0.04 | 0.07 | 0.05 | 0.09 | 0.03 | 0.05 | 0.04 | 0.07 |
| | | Determination | a | | | | a | | | | a | | | |
| Comprehensive determination (rank) | | | A | | | | A | | | | A | | | |

### (Examples 1 and 3 to 4)

The fiber material (material of the filament) constituting the tension member of the toothed belt was changed and compared based on the toothed belt (E glass fiber: A1) of Example 1. In Example 3 in which a tension member of a high-strength glass fiber (K glass fiber: A2) having a larger elastic modulus than that of Example 1 was used, and Example 4 in which a tension member of a carbon fiber (A3) having a larger elastic modulus than that of Example 3 was used, there is a tendency that the higher the elastic modulus and the lower the elongation of the tension member (that is, the belt), the lower the level of the rotation angle difference (maximum value of the absolute value) for each load torque of the driven pulley and each rotation speed of the drive pulley, and the higher the responsiveness (responsiveness to the drive at the time of forward and reverse switching), and rank A was made under these conditions (Examples 1 and 3 to 4).

### (Obtained Effects)

From the above verification results, when the belt power-transmission systems of Examples 1 to 4 are applied to a belt power-transmission system driven to be capable of forward and reverse rotation in a robot arm drive application or the like, since the automatic tensioner configured such that the biasing action of the spring (tension spring) and the swing action about the swing shaft act together on the two tension rollers and the restriction unit that restricts the two tension rollers from swinging about the swing shaft in the direction opposite to the biasing direction of the spring from the balanced position where the drive pulley and the driven pulley are stopped are provided, it is possible to ensure predetermined belt mounting tension (about 5 N/mm width) and automatically adjust (correct) a tension drop at the initial stage of belt running without performing the aging [retensioning the belt (tension adjustment operation) by adjusting the intershaft distance or the like after the idling (breaking-in driving)], it is possible to set whether the rotation of the driven pulley is inversed, serving as the index of the attenuation property of the driven pulley at the time of stopping forward and reverse rotation, to a state of "no inversion" even if the speed of the operation involving forward and reverse rotation (acceleration or deceleration speed of the drive pulley) is relatively high, at 10 rotation/s² to 25 rotation/s², and the load on the driven pulley increases from 0.8 N·m to 3 N·m, and it is further possible to constantly keep the rotation angle difference (absolute value), serving as an index of responsiveness to the drive at the time of forward and reverse switching, within an allowable range (within 0.2°), and thus, it is possible to repeatedly ensure the positioning accuracy and ensure the synchronous power-transmission easily even if the load on the driven pulley increases.

Although the present invention has been described in detail with reference to specific embodiments, it is apparent to those skilled in the art that various modifications and changes can be made without departing from the spirit and scope of the present invention.

The present application is based on Japanese Patent Application No. 2023-124260 filed on July 31, 2023 and Japanese Patent Application No. 2024-115605 filed on July 19, 2024, and the content thereof is incorporated herein by reference.

### REFERENCE SIGNS LIST

1: belt power-transmission system
11: second arm
2: drive pulley
21: drive shaft
22: rotation center
3: driven pulley
31: driven shaft
32: rotation center
4: toothed belt
5: automatic tensioner
51: first tension roller
51A: first base shaft portion
52: second tension roller
52A: second base shaft portion
53: swing shaft
54: spring
55: sliding member
56: first swing arm
561: tip end portion
562: base end portion
57: second swing arm
571: tip end portion
572: base end portion
6: restriction member (restriction unit)
61: main body portion
62: first swing arm restriction portion
63: second swing arm restriction portion
R: central axis
PL: pulley center line
RL: roller center line

## Claims

1. A belt power-transmission system comprising:
a drive pulley fixed to a drive shaft that is driven so as to be capable of forward and reverse rotation by a drive source;
a driven pulley rotatably supported;
a toothed belt wound between the drive pulley and the driven pulley; and
an automatic tensioner configured to automatically and appropriately maintain tension of the toothed belt via two tension rollers that are provided rotatably about respective base shaft portions at positions on both sides sandwiching a pulley center line connecting a rotation center of the drive pulley and a rotation center of the driven pulley, and are in contact with the toothed belt, wherein
the automatic tensioner comprises:
a swing shaft that passes through a point on the pulley center line or a point on an extension line of the pulley center line and extends in a direction parallel to the drive shaft, the point being separated from an intersection point of the pulley center line and a roller center line connecting rotation centers of the two tension rollers; and
a spring that biases the two tension rollers in a direction toward each other or a direction away from each other,
the two tension rollers are configured to be able to swing about the swing shaft,
the belt power-transmission system further comprises a restriction unit configured to restrict swinging of the two tension rollers, and
the restriction unit is provided at a position that restricts the two tension rollers from swinging about the swing shaft in a direction opposite to a biasing direction of the spring from a balanced position where the drive pulley and the driven pulley are stopped.

2. The belt power-transmission system according to claim 1, wherein
the automatic tensioner further comprises:
a first swing arm in which one end portion is provided with the base shaft portion of one of the tension rollers, and the other end portion is rotatably supported with respect to the swing shaft; and
a second swing arm in which one end portion is provided with the base shaft portion of the other tension roller, and the other end portion is rotatably supported with respect to the swing shaft,
the two tension rollers are configured to swing about the swing shaft via the first swing arm and the second swing arm, and
the restriction unit is provided at a position where the restriction unit is capable of coming into contact with the first swing arm and the second swing arm.

3. The belt power-transmission system according to claim 1 or 2, wherein
the spring is stretched on the roller center line between the base shaft portions of the two tension rollers and biases the two tension rollers.

4. The belt power-transmission system according to any one of claims 1 to 3, wherein
the swing shaft is separated toward a driven pulley side from the intersection point of the roller center line and the pulley center line.

5. The belt power-transmission system according to any one of claims 1 to 4, wherein
the two tension rollers are provided on a drive pulley side, or on a pulley side where the pulley has a smaller diameter out of the drive pulley and the driven pulley.

6. The belt power-transmission system according to any one of claims 1 to 5, wherein
the spring is a tension spring, and
the two tension rollers are provided so as to be in contact with an outer circumferential surface of the toothed belt.

7. The belt power-transmission system according to any one of claims 1 to 6, wherein
a diameter of the drive pulley is smaller than a diameter of the driven pulley.

8. The belt power-transmission system according to any one of claims 1 to 7, wherein
the drive pulley and the driven pulley are fixed to a robot arm and drive the robot arm.
